(19) Europäisches Patentamt

European Patent Office

Office européen des brevets

(11) Veröffentlichungsnummer: **0 111 123**

**B1**

(12) # EUROPÄISCHE PATENTSCHRIFT

(45) Veröffentlichungstag der Patentschrift:
13.08.86

(21) Anmeldenummer: 83110603.4

(22) Anmeldetag: 24.10.83

(51) Int. Cl.⁴: **G 06 F 13/28,** G 06 F 13/12

(54) **Verfahren und Anordnung zur Durchführung von kontinuierlichen Datentransfers im Streaming-Verfahren bei der Ausführung von Ein-/Ausgabeoperationen über Selektor- oder Blockmultiplexkanäle des Ein-/Ausgabewerkes einer Datenverarbeitungsanlage.**

(30) Priorität: 28.10.82 DE 3239997

(43) Veröffentlichungstag der Anmeldung:
20.06.84 Patentblatt 84/25

(45) Bekanntmachung des Hinweises auf die Patenterteilung:
13.08.86 Patentblatt 86/33

(84) Benannte Vertragsstaaten:
AT BE CH FR GB IT LI NL SE

(56) Entgegenhaltungen:
EP-A-0 021 489

COMPUTER DESIGN, Band 21, Nr. 4, April 1982,
Seiten 167-169, Winchester, Mass., USA, K.R.
LYNCH: "Designers, shake hands with data
streaming"
IBM TECHNICAL DISCLOSURE BULLETIN, Band 24,
Nr. 5, Oktober 1981, Seiten 2621-2622, New York,
USA, S.R. FIRTH et al.: "Dynamic data
streaming/DC interlock contro for a multipath
channel-to-channel adapter"
PATENTS ABSTRACTS OF JAPAN; Band 6, Nr.
159(P-136)(1037), 20. August 1982

(73) Patentinhaber: Siemens Aktiengesellschaft Berlin
und München, Wittelsbacherplatz 2, D-8000
München 2 (DE)

(72) Erfinder: Lange, Kurt, Alfred- Neumann- Anger 15,
D-8000 München 83 (DE)
Erfinder: Olivier, Pierre, Ferdinand- Miller- Platz 12,
D-8000 München 2 (DE)

## Beschreibung

Die Erfindung betrifft ein Verfahren zur Durchführung von kontinuierlichen Datentransfers im Streaming-Verfahren über einen eine periphere Einheit mit der Kanalsteuerung eines Ein-/Ausgabewerkes verbindenden Selektor-oder Multiplexkanal im Rahmen von auszuführenden Ein-/Ausgabeoperationen einer Datenverarbeitungsanlage unter Verwendung einer Kanalsteuerung mit einem Pufferspeicher mit vorgeschaltetem Aufnahmeregister für über den Kanal eintreffende Daten, in dem die zu übertragenden bzw. übertragenen Daten vorübergehend zwischengespeichert werden, und mit einer selbständig arbeitenden Ablaufsteuerung für den kanalseitigen Datentransfer. Die Erfindung betrifft außerdem eine Anordnung zur Durchführung dieses Verfahrens.

Die Verwendung von Selektor- oder Blockmultiplexkanälen, die sowohl als Selektorkanal als auch als Blockmultiplexkanal arbeiten können, als Ein-/Ausgabekanäle von Datenverarbeitungsanlagen für die Bewältigung von hohen Datenraten ist allgemein bekannt (z.B. Siemens-Druckschrift D 15/5104-04: Zentraleinheiten Siemens-System 7.500 und 7.700 - Beschreibung und Befehlsliste, insbesondere Seiten 3-1 bis 3-5). Die Rahmenbedingungen für die Abwicklung des Datentransfers auf den Kanälen sind dabei durch die Standardschnittstelle festgelegt (insbesondere Siemens-Druckschriften D 15/53000 und D 15/53001: Der Standardanschluß des DVS 7.000). Die während einer Ein/Ausgabeoperation übertragenen Daten werden in der Regel in einem Pufferspeicher des Ein-/Ausgabewerkes (DE-PS 26 10 428) und/oder der dem Kanal im Ein-/Ausgabewerk individuell zugeordneten Kanalsteuerung (z.B. Siemens-Druckschrift U 64050-J: WHB Siemens-System 7.500/7.700, Band 3, Seiten 290 bis 331, insbesondere Seite 291 mit zugehöriger Beschreibung) zwischengespeichert, um unterschiedliche Datenraten einander anzugleichen und/oder die Datenbreite zu ändern. Die Übertragung der Daten auf den Kanälen erfolgt dabei im Wechselspiel von Datenwort und Quittung. Ein solches synchrones Quittungsverfahren ist aber bei einem Datentransfer im Streaming-Verfahren nicht mehr durchführbar. Will man daher die Kanäle auch für diese Art der Datenübertragung verwenden, so sind entsprechende Vorkehrungen zu treffen, und es ist die Schnittstellensignalisierung entsprechend anzupassen. Dabei stellt sich jedoch die Schwierigkeit, daß die Schnittstellenbedingungen der Standardschnittstelle der Kanäle für die übrigen Übertragungsverfahren nicht beeinträchtigt werden dürfen und daß auch keine zusätzlichen Schnittstellenleitungen für die Signalisierung zur Verfügung stehen.

Es ist daher Aufgabe der Erfindung, die Durchführung von Datentransfers im Streaming-Verfahren über die bekannten Standardschnittstellen der Ein-/Ausgabekanäle von Datenverarbeitungsanlagen zu ermöglichen, ohne daß die Schnittstellen geändert oder die Schnittstellenbedingungen für die bisher üblichen Übertragungsverfahren dadurch beeinträchtigt werden, wobei die zusätzlichen Steuerfunktionen ohne großen Aufwand in die bisherigen Kanalsteuerungen integrierbar sind.

Diese Aufgabe wird ausgehend von Verfahren der eingangs genannten Art bei dem Verfahren gemäß der Erfindung durch die kennzeichnenden Merkmale des Patentanspruches 1 gelöst.

Die Erfindung nutzt dabei die Tatsache, daß in der Regel bisher nicht alle vorgesehenen und möglichen Schnittstellensignale ausgenutzt werden und daß durch die Zeitvariable im Zusammenwirken der Schnittstellensignale noch Möglichkeiten zur Einfügung neuer Steuerfunktionen gegeben sind, so daß die bisherigen Schnittstellenbedingungen nicht beeinträchtigt und auch keine neuen Schnittstellenleitungen erforderlich werden. Außerdem wird der strukturelle Aufbau der bisherigen Kanalsteuerung weitgehend ausgenutzt, wobei im wesentlichen nur der kanalseitige Steuerungsteil ergänzt wird, indem ein zusätzlicher Pufferspeicher mit kanalseitigem Eingaberegister dem bisherigen Aufnahmeregister vorgeschaltet und die stufenweise erfolgende Weiterleitung der über den Kanal eintreffenden Datenwörter der den Datentransfer über den Kanal während der Ausführungsphase selbständig steuernden Ablaufsteuerung übertragen wird, die die erforderlichen Steuerimpulse von den die Datenwörter begleitenden Gültigkeitsstrobes ableitet. Sollten derartige Gültigkeitsstrobes als Schnittstellensignal von der peripheren Einheit zur Kanalsteuerung bisher nicht vorgesehen sein, so kann hierfür in der Regel ebenfalls ein bisher nicht genutztes vorhandenes Schnittstellensignal herangezogen werden. Die Einfügung des zusätzlichen Pufferspeichers verhindert dabei den Verlust von sich bereits auf der Kanalstrecke befindlichen Datenwörtern, wenn aus irgendeinem Grunde der eigentliche Pufferspeicher in der Kanalsteuerung vorübergehend die eingetroffenen Datenwörter nicht unmittelbar übernehmen kann, da ein entsprechendes Schnittstellensignal bei der gegebenen hohen Datenrate nur verzögert wirksam werden kann. Die damit verbundene Steigerung der Leistungsfähigkeit der Anordnung schafft somit neben der erforderlichen Verständigung über die Betriebsart die Voraussetzung für die tatsächliche Durchführung des Streaming-Verfahrens.

Eine entsprechend diesem Verfahren arbeitende Anordnung gemäß der Erfindung ergibt sich aus den kennzeichnenden Merkmalen des Patentanspruches 14.

Die übrigen Patentansprüche beziehen sich auf Weiterbildungen des Verfahrens und der Anordnung gemäß der Erfindung, und zwar auf die Auslösung der Ausführungsphase des Datentransfers und die Unterbrechungssteuerung, insbesondere bei Erreichen eines vorgegebenen Füllungsstandes des zusätzlichen Pufferspeichers, durch ein die Empfangsbereitschaft der jeweiligen Empfangsseite anzeigendes Schnittstellensignal, auf die Quittierung empfangener Daten und die Sicherung der Datenübertragung durch Zählung sowohl der ausgesendeten Gültigkeitsstrobes und der empfangenen Quittungsimpulse, auf die Beendigung der jeweiligen Ausführungsphase und die Einleitung der Abschlußphase während eines Datentransfers sowie auf die Ausbildung der Ablaufsteuerung zur Durchführung der von den verschiedenen Betriebsarten abhängigen Ablauffolgen.

Diese und weitere Einzelheiten der Erfindung seien nachfolgend anhand eines in der Zeichnung dargestellten Ausführungsbeispieles näher erläutert. Im einzelnen zeigen

FIG 1 ein Übersichtsschaltbild einer Datenverarbeitungsanlage,

FIG 2 ein erweitertes Übersichtsschaltbild in Anlehnung an das von FIG 1 mit weiteren Einzelheiten der Kanalsteuerung CHn,

FIG 3 ein Übersichtsschaltbild in Anlehnung an das von FIG 2 zur Erläuterung der Zusammenarbeit der Ablaufsteuerung innerhalb der Kanalsteuerung mit den übrigen Steuereinrichtungen,

FIG 4 ein Zeitdiagramm zur Erläuterung der Einleitung eines Ein-/Ausgabetransfers über die Ablaufsteuerung nach FIG 3,

FIG 5 und 6 ein ausführliches Blockschaltbild des für das Verständnis der Erfindung erforderlichen Teiles der Ablaufsteuerung nach FIG 3,

FIG 7A bis 7C Zeitdiagramme für das Blockschaltbild nach FIG 5 und FIG 6 zur Erläuterung der einzelnen Signalfolgen bei einem Ein-/Ausgabetransfer und

FIG 8A bis 9B Zeitdiagramme zur Erläuterung des weiteren Verlaufs eines Ein-/Ausgabetransfers in Fortsetzung des Zeitdiagrammes von FIG 4.

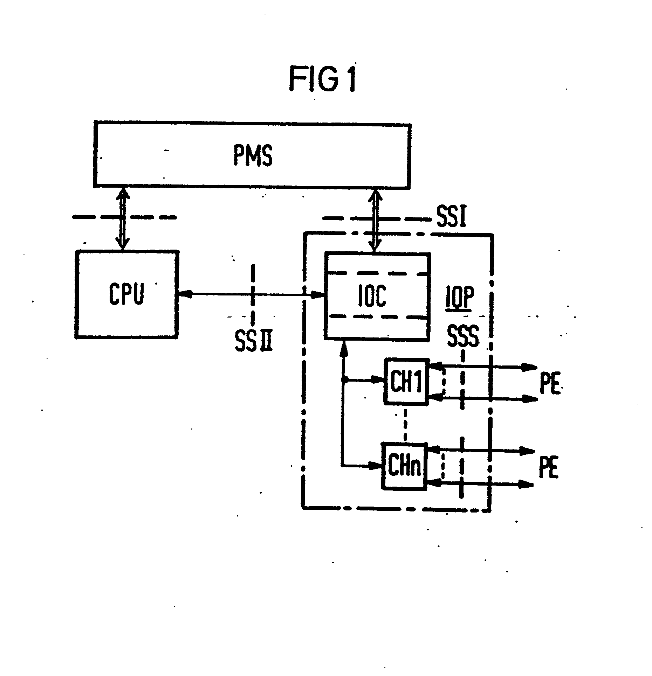

FIG 1 gibt die Struktur einer bekannten Datenverarbeitungsanlage wieder, wie sie z.B. aus der Druckschrift D 15/5104-04: Zentraleinheiten Siemens-System 7.500 und 7.700 - Beschreibung und Befehlsliste, insbesondere Seiten 3-1 bis 3-5 bekannt ist. Danach sind an einen Arbeitsspeicher PMS über gleichartige Schnittstellenanschlüsse SSI wenigstens ein Zentralprozessor CPU und wenigstens ein Ein-/Ausgabewerk IOP angeschlossen, wobei Zentralprozessor CPU und Ein-/Ausgabewerk IOP über eine interne Schnittstelle SSII miteinander gekoppelt sind. Das Ein-/Ausgabewerk IOP weist mehrere Kanäle mit individuellen Kanalsteuerungen, z.B. CH1 bis CHn, auf, die über gleichartige Standardschnittstellen SSS mit peripheren Einheiten PE, z.B. peripheren Geräten oder diesen vorgeschalteten Gerätesteuerungen, in Verbindung stehen.

Die Übertragung von Daten zwischen den peripheren Einheiten PE und dem Arbeitsspeicher PMS erfolgt bekanntlich in jeweils drei Arbeitsphasen, nämlich

1. Veranlassen der Ein-/Ausgabeoperation durch Anstoßen des Ein-/Ausgabewerkes IOP durch den Zentralprozessor CPU,

2. Durchführen der Ein-/Ausgabeoperation mit Übertragung der benötigten Daten, Steuerbefehle und Zustandsinformationen und

3. Abschließen der Ein-/Ausgabeoperation mit Befehlsausführungsrückmeldung an den Zentralprozessor CPU.

Die vorgenannte zweite Arbeitsphase, nämlich die Durchführung der Ein-/Ausgabeoperation, gliedert sich dabei gleichfalls in drei Phasen, nämlich

a) Einleitung des Datentransfers durch Übergabe der Geräteadresse und des Gerätezustandswortes mit Einstellung der Übertragungsart,

b) Ausführung des eigentlichen Datentransfers und

c) Abschluß des Datentransfers.

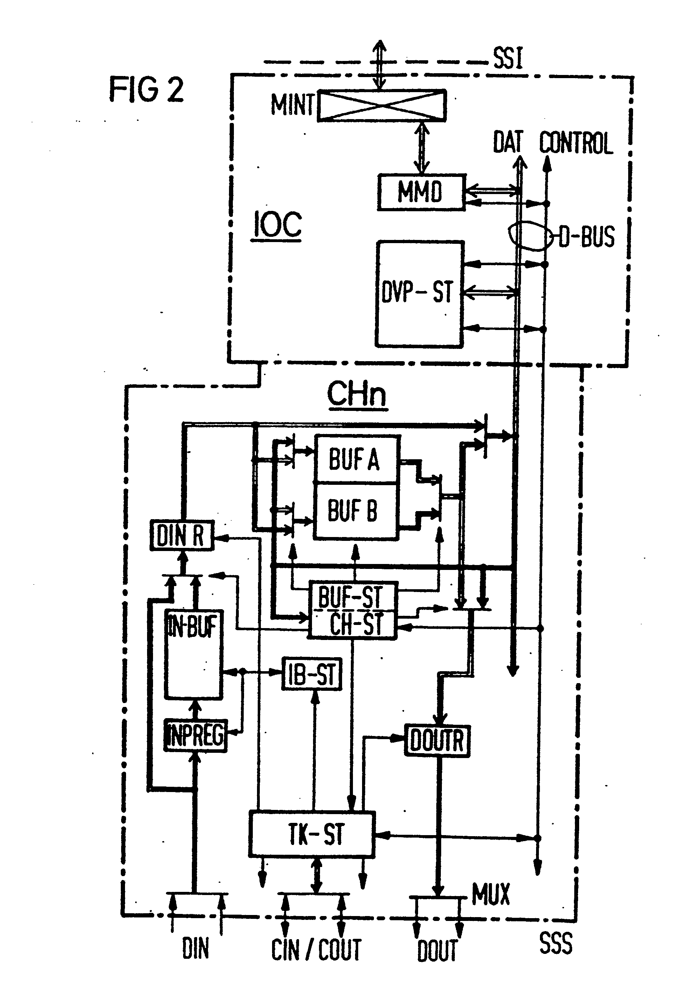

FIG 2 zeigt in Anlehnung an die DE-AS 28 45 218 und die Siemens Druckschrift U 64 050-J, insbesondere Seiten 290 bis 331, weitere Einzelheiten einer entsprechend der Erfindung arbeitenden Kanalsteuerung CHn mit Teilen des übergeordneten Ein-/Ausgabewerkes in Form eines Ein-/Ausgabeprozessors IOC, wobei lediglich der für den eigentlichen Datentransfer benötigte Teil berücksichtigt ist.

Der Schnittstellenanschluß des Arbeitsspeichers PMS ist über die Schnittstelle SSI zunächst mit einer internen Schnittstellensteuerung MINT verbunden, an deren einem Eingang der Pufferspeicher MMD angeschlossen ist. Dieser Pufferspeicher steht andererseits über ein Datenleitungssystem D-BUS mit einem den Datentransfer steuernden Mikroprozessor DVP-ST sowie mit den angeschlossenen Kanalsteuerungen, von der nur die Kanalsteuerung CHn gezeigt ist, in Verbindung. Die Kanalsteuerung weist gleichfalls einen Pufferspeicher BUF A/B für z.B. 2 x 32 Bytes auf, der als Wechselpuffer arbeitet und die über den Kanal zuübertragen bzw. übertragenen Datenwörter zwischenspeichert. Die Ein- bzw. Ausgabe der Datenwörter in bzw. aus dem Pufferspeicher BUF A/B erfolgt durch die zugehörige Pufferspeichersteuerung BUF-ST in Verbindung mit der Kanalsteuereinrichtung CH-ST, wobei der Datenaustausch zwischen den beiden Pufferspeichern MMD und BUF A/B in beiden Richtungen jeweils abhängig von Steuersignalen des Mikroprozessors DVP-ST gesteuert wird, während der Datenaustausch mit dem Kanal über die Standardschnittstelle SSS in erster Linie von der Ablaufsteuerung TK-ST unterstützt von Steuersignalen des Mikroprozessors DVP-ST vorgenommen wird.

Die über die Schnittstelle SSS angeschlossenen Kanalleitungsbündel für z.B. maximal zwei angeschlossene periphere Einheiten werden in an sich bekannter Weise durch wahladresse durch die Ablaufsteuering TK-ST bereitgestellt wird. Weiterhin sind zwei Datenwortregister DINR für die Datenworteingabe und DOUTR für die Datenausgabe vorgesehen, die jeweils einerseits mit den entsprechenden Kanalleitungsbündeln DIN bzw. DOUT verbunden und andererseits zu den Datenleitungen DAT des Leitungssystems D-BUS durchschaltbar sind. Die den Datentransfer steuernden Schnittstellensignale auf den Kanalleitungsbündeln CIN/COUT werden ebenfalls von der Ablaufsteuerung TK-ST geliefert bzw. ausgewertet, wobei die Einleitungs- und Abschlußphase des Datentransfers durch Steuersignale auf den Signalleitungen CONTROL des Datenleitungssystems D-BUS unterstützt wird.

Zusätzlich zu dem insoweit bekannten Aufbau der Kanalsteuerung CHn sind in Auswirkung der Erfindung an das Kanalleitungsbündel DIN ein weiteres Eingaberegister INPREG und ein weiterer Pufferspeicher INBUF mit einer Speicherkapazität von z.B. 8 Bytes mit der zusätzlichen Puffersteuerung IB-ST angeschaltet, wobei die über den Kanal eintreffenden Datenwörter entweder über das Eingaberegister INPREG und den zusätzlichen Pufferspeicher INBUF oder aber direkt an das Aufnahmeregister DINR weitergeleitet werden können, je nachdem, ob die Übertragung im Streaming-Verfahren erfolgen soll oder nicht.

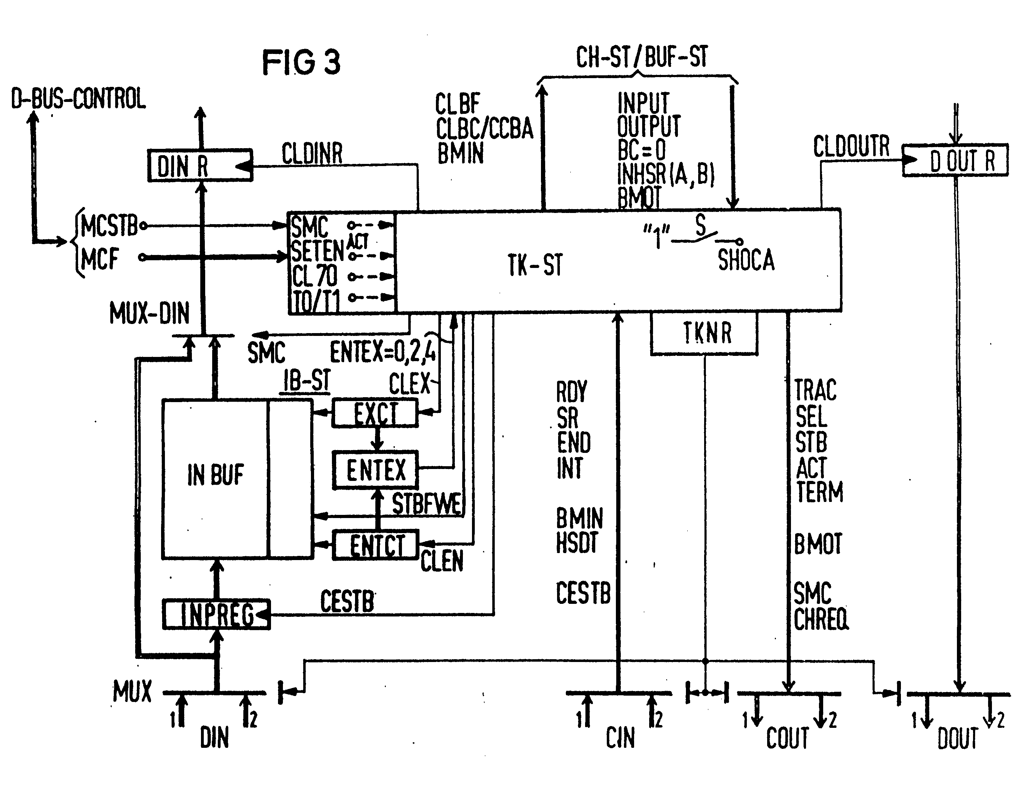

FIG 3 zeigt in einem weiteren Übersichtsschaltbild die Zusammenarbeit der Auswahlsteuerung TK-ST mit den übrigen Steuereinrichtungen der Kanalsteuerung CHn und die dafür maßgebenden Steuersignale. Es sind dies in erster Linie die die Arbeitsweise der Ablaufsteuerung TK-ST einstellenden und beeinflussenden Steuersignale, die über die Steuerleitungen CONTROL des Leitungssystems D-BUS direkt oder über die Steuereinrichtung CH-ST geliefert bzw. abgegeben werden, nämlich die Mikrosteuerbefehle MCF der übergeordneten Mikroprozessorsteuerung DVP-ST in Verbindung mit einem jeweiligen Gültigkeitsstrobe MCSTB und die Steuersignale INPUT, OUTPUT, BMOT, INHSR(A,B) sowie BMIN für die Zusammenarbeit mit der Steuereinrichtung CH-ST, die im übrigen ebenfalls mit der übergeordneten Mikroprozessorsteuerung DVP-ST zusammenarbeitet, sowie die notwendigen Schnittstellensignale auf den Kanalleitungsbündeln CIN und COUT. Diese Schnittstellensignale haben in Anlehnung an die Siemensdruckschriften D 15/5300 und D 15/53001 folgende Bedeutung:

TRAC und SEL: sie kennzeichnen in Kombination gegenüber der peripheren Einheit, vor allem in der Einleitungs- und Abschlußphase des Datentransfers, die Bedeutung der Informationen auf den Datenleitungen DIN und DOUT

STB: es bedingt als Gültigkeitsstrobe die Übernahme des auf den Datenleitungen DOUT angebotenen Datenwortes durch die periphere Einheit, sowie die Wegnahme des von der peripheren Einheit auf den Datenleitungen DIN angebotenen Datenwortes und dient zusätzlich als Quittungsimpuls für die in Gegenrichtung gelieferten Gültigkeitsstrobes CESTB

ACT: es quittiert eine Bedienungsanforderung SR und bewirkt die Abschaltung derselben

TERM: es fordert den Abschluß des Datentransfers und die Meldung der peripheren Einheit mit SR und END

RDY: es kennzeichnet in der Einleitungsphase die Einschaltung des gewünschten Gerätes

SR: es kennzeichnet die Bedienungsanforderung einer peripheren Einheit und zusätzlich deren Empfangsbereitschaft

END: es leitet zusammen mit SR die Abschlußphase eines Datentransfers ein

INT: es bewirkt eine Programmunterbrechung im Rahmen der Abschlußphase eines Datentransfers

>>SDT: es meldet den Anschluß einer peripheren Einheit mit erhöhter Datenrate bei der Datenübertragung.

In Auswirkung der Erfindung kommen zu diesen bekannten Schnittstellensignalen folgende drei hinzu:

SMC: es wird aus den Mikrobefehlen MCF direkt abgeleitet und kennzeichnet gegenüber der peripheren Einheit den Datentransfer im Streaming-Verfahren

CHREQ: es kennzeichnet analog SR eine Bedienungsanforderung und die Empfangsbereitschaft in der Kanalsteuerung CHn

CESTB: es bedingt analog STB als Gültigkeitsstrobe die Übernahme des auf den Datenleitungen DIN angebotenen Datenwortes durch die Kanalsteuerung CHn und dient als Quittungsimpuls für eintreffende Gültigkeitsstrobes STB.

Schließlich kennzeichnet das in der Ablaufsteuerung TK-ST durch einen Schalter S erzeugte Steuersignal SHOCA den Anschluß der peripheren Einheit über kurze Kanalleitungen, was in einigen Fällen gesondert zu berücksichtigen ist.

Weiterhin aufgeführt sind in FIG 3 die für die Weiterleitung der Datenwörter in der einen oder anderen Richtung notwendigen Steuersignale. Es sind dies die Registersteuerimpulse

CESTB für die Eingabe in das Eingaberegister INPREG,

CLDINR für die Eingabe in das Aufnahmeregister DINR,

CLDOUTR für die Eingabe in das Ausgaberegister DOUTR, und die Pufferspeichersignale

CLEN für die Fortschaltung des Eingabeadressenzählers ENTCT,

STBFWE für das Einschreiben in den Pufferspeicher INBUF

CLEX für die Fortschaltung des Ausgabeadressenzählers EXCT,

ENTEX für die Kennzeichnung des Füllstandes des Pufferspeichers INBUF,

CLBC/CCBA für die Fortschaltung des Datenwortzählers BC und für die Fortschaltung des Adressenzählers des Pufferspeichers BUF A/B bei der Ein- oder Ausgabe,

CLBF für die Eingabe in den Pufferspeicher BUF A/B sowie

BC = O für die Kennzeichnung des Übertragungsendes einer vorgegebenen Anzahl von Datenwörtern.

Die Übertragungsrichtung wird dabei durch die Signale INPUT bei Eingabe oder OUTPUT bei Ausgabe festgelegt. Die weiteren Einstellungssignale BMOT und BMIN steuern bzw. kennzeichnen die Umschaltung von Selektorkanalbetrieb auf den Blockmultiplexbetrieb, während das Signal INHSR(A,B) die Ablaufsteuerung TK-ST sperrt oder freigibt.

Die Ablaufsteuerung TK-ST arbeitet wie bei der bekannten Anordnung nur während der Durchführungsphase und der Abschlußphase eines Datentransfers selbsttätig mit dem Kanal zusammen, wohingegen während der Einleitungsphase des Datentransfers ebenso wie während aller übrigen Arbeitsphasen im Rahmen einer Ein-/Ausgabeoperation die notwendigen Schnittstellensignale und -Informationen von der übergeordneten Mikroprozessorsteuerung DVP-ST direkt gesetzt und rückgesetzt bzw. übernommen werden. Desgleichen erfolgt der Datenaustausch zwischen dem Pufferspeicher BUF A/B der Kanalsteuerung CHn und dem Pufferspeicher MMD an der Schnittstelle zum Arbeitsspeicher PMS ausschließlich durch die übergeordnete Mikroprozessorsteuerung DVP-ST des Ein-/Ausgabewerkes, was in der bereits genannten Siemens-Druckschrift U 64050-J ausführlich erläutert ist.

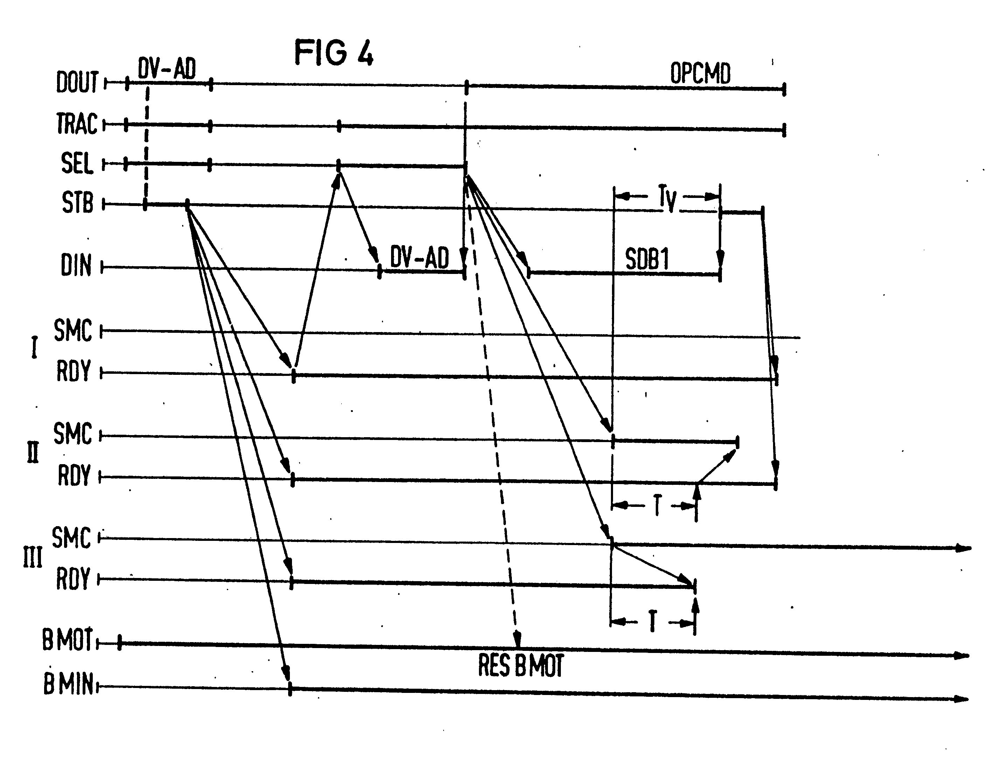

FIG 4 zeigt den an sich bekannten zeitlichen Ablauf der Schnittstellensignalisierung an der Standardschnittstelle SSS über die Ablaufsteuerung TK-ST, in die die Signalisierung für das Streaming-Verfahren gemäß der Erfindung integriert ist.

Nach Einleitung einer Ein-/Ausgabeoperation durch den Zentralprozessor CPU und Aufbereitung des Kanalbefehlswortes wird in an sich bekannter Weise zunächst die Geräteadresse DV-AD ausgesendet, wobei die Signale TRAC und SEL gesetzt sind und mit dem Signal STB die Übernahme durch die periphere Einheit PE ausgelöst wird. Das Rücksignal RDY kennzeichnet die Erkennung der ausgesandten Geräteadresse und führt zum erneuten Setzen der Signale TRAC und SEL, woraufhin die periphere Einheit die eigene Geräteadresse zum Vergleich zurücksendet. Bei Adressenübereinstimmung wird durch Abschalten von SEL das Gerätestatuswort SDBI angefordert, übertragen und untersucht. Steht der Ausführung des beabsichtigten Datentransfers kein Hindernis im Wege, wird bei TRAC= 1 und SEL=0 der erste Befehl OPCMD mit STB = 1 übergeben, was zur Abschaltung des Signales RDY führt. Die Einleitungsphase für den Normalbetrieb entsprechend dem Zeilenpaar I ist damit abgeschlossen.

Soll der Selektorkanal als Blockmultiplexkanal arbeiten, so wird, wie durch die unteren beiden Zeilen angedeutet ist, mit der Aussendung der Geräteadresse DV-AD durch die Kanalsteuerung CHn auch das Signal BMOT gesetzt. Ist der Blockmultiplexbetrieb möglich, dann antwortet die periphere Einheit mit dem Signal BMIN zusammen mit dem Signal RDY. Im anderen Falle wird das Signal BMOT mit der Anforderung des Gerätestatuswortes SDB1 wieder abgeschaltet, was gestrichelt und durch den Hinweis RES BMOT angedeutet ist.

Soll nun während des Selektor- oder Blockmultiplexbetriebes der Datentransfer im Streaming-Verfahren ausgeführt werden, so wird entsprechend den Zeilenpaaren II und III mit einer vorgegebenen Vorlaufzeit $T_V$ zu dem den ersten Befehl OPCMD wirksam schaltenden Gültigkeitsstrobe STB das Signal SMC gesetzt und die Abschaltung des Signals RDY überwacht. Erfolgt diese wie im Normalbetrieb gemäß dem Zeilenpaar II nicht innerhalb einer vorgegebenen Zeitdauer T nach Setzen des Signals SMC, so wird danach SMC wieder zurückgenommen. Andernfalls bleibt gemäß dem Zeilenpaar III das Signal SMC für die gesamte Dauer des eingeleiteten Transfers bestehen.

Wie bereits erwähnt, wird der Ablauf dieser Einleitungsphase eines Datentransfers allein durch das Ein-/Ausgabewerk, also die Mikroprozessorsteuerung DVP-ST, bewirkt und überwacht. Erst am Ende dieser Einleitungsphase und gegebenenfalls nach Bereitstellung von Daten für die Datenausgabe im Pufferspeicher BUF A/B wird die Ablaufsteuerung TK-ST für die Transfersteuerung auf dem angeschlossenen Kanal freigegeben.

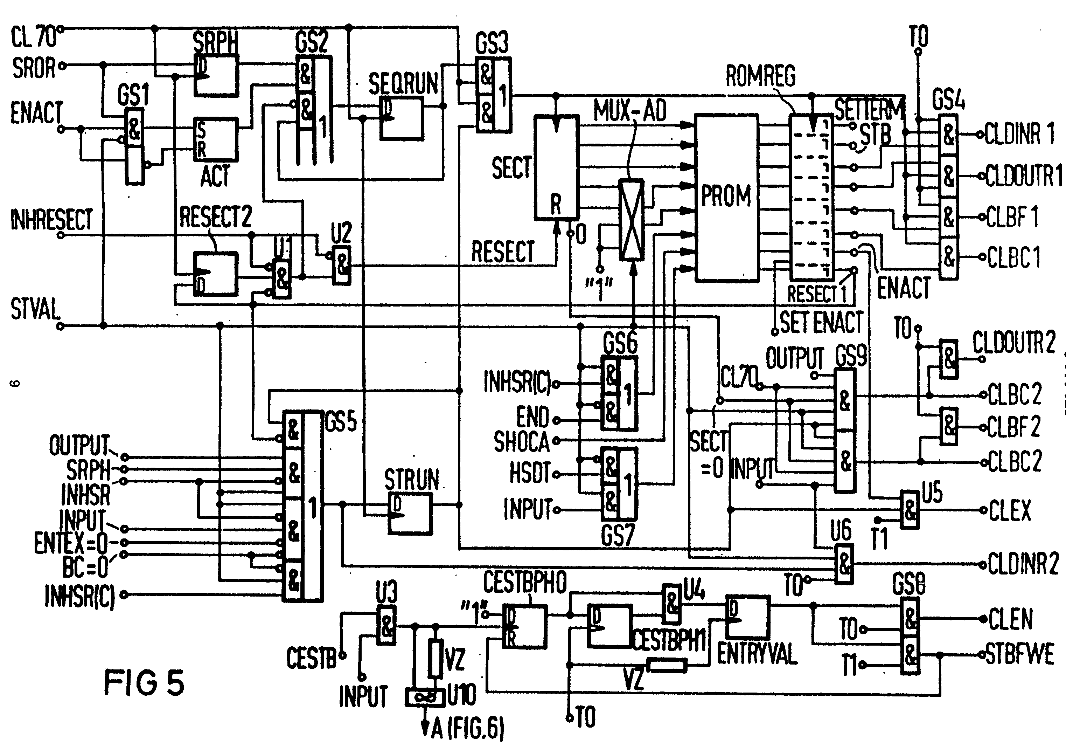

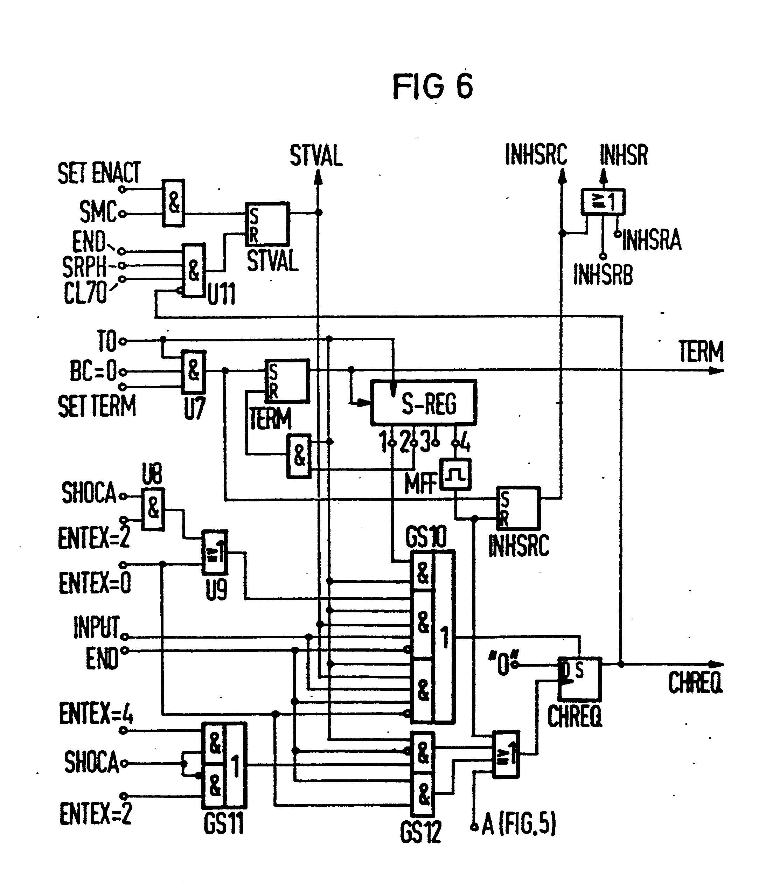

Der Aufbau der gemäß der Erfindung erweiterten Ablaufsteuerung TK-ST ergibt sich aus FIG 5 und 6, wobei FIG 5 Bezug nimmt auf Seite 306 und 307 der bereits genannten Siemens-Druckschrift U64050-J, während FIG 6 die Ableitung der für die Schnittstellensignalisierung benötigten Schnittstellensignale TERM und CHREQ zeigt.

Wesentlicher Bestandteil der Ablaufsteuerung ist wie bisher der Ablaufzähler SECT, zum Beispiel ein fünfstufiger Binärzähler, dessen Ausgänge als Adresse die einzelnen Speicherabschnitte eines Steuerspeichers PROM adressieren, in denen Angaben über die jeweils auszulösenden Signale gespeichert sind, anhand derer die einzelnen Stufen eines nachgeschalteten Registers ROMREG gesetzt oder rückgesetzt werden. Die von den einzelnen Registerstufen gelieferten Signale werden dann unmittelbar oder verknüpft mit Taktimpulsen des Grundtaktes CL70 bzw. des Hilfstaktes TO durch die Gatterschaltung GS4 zur Steuerung ausgenutzt.

Der Ablaufzähler SECT arbeitet, gesteuert durch die das Signal RESECT1 liefernde Registerstufe des Registers ROMREG zyklisch, so daß durch die Adressierung in Verbindung mit dem Speicherinhalt des Steuerspeichers PROM die Zykluslänge und die damit verbundene Signalfolge beliebig einstellbar ist. Die Adressierung des Steuerspeichers PROM ist dabei nicht nur vom Zähler SECT abhängig, sondern zusätzlich auch von zum Beispiel drei weiteren Adressiereingängen, die wie bei einer zweidimensionalen Adressierung eine Auswahl zwischen verschiedenen bestimmten Speicherbereichen ermöglichen, un unterschiedliche Ablauffolgen abhängig von den den Gatterschaltungen GS6 und GS7 zugeführten Signalen, wie z.B. END, SHOCA oder HSDT, zu ermöglichen.

Dem Ablaufzählar SECT ist ein Steuerschaltkreis,bestehend aus der bistabilen Kippstufe SEQRUN und einer aus den Verknüpfungsgliedern GS1 und GS2 sowie den weiteren Kippstufen SRPH und ACT bestehenden Ansteuerschaltung, vorgeschaltet. Dieser Steuerschaltkreis und damit normalerweise auch die gesamte Ablaufsteuerung TK-ST wird freigegeben, wenn die übergeordnete Mikroprozessorsteuerung DVP-ST im Register ROMREG die das Signal ENACT liefernde Registerstufe mit dem aus dem Mikrobefehl MCF abgeleiteten Signal SET/ENACT gesetzt hat (FIG 3 - Mikroprogrammsteuerung MP-ST). Mit dem Signal ENACT wird in an sich bekannter Weise über die Gatterschaltung GS1 das Vorliegen einer Bedienungsanforderung SROR der angeschlossenen peripheren Einheiten PE überwacht und in das Taktsystem CL70 eingephast, indem die Kippstufen ACT und SRPH gesetzt werden, die dann über die Gatterschaltung GS2 die Kippstufe SEQRUN setzen, so daß über die Gatterschaltung GS3 die Impulse des Taktes CL70 für den Ablaufzähler SECT freigegeben werden.

In Ergänzung dieses an sich bekannten Teiles der Ablaufsteuerung TK-ST ist ein weiterer Steuerschaltkreis, bestehend aus der bistabilen Kippstufe STRUN und der vorgeschalteten Gatterschaltung GS5, vorgesehen, so daß der Ablaufzähler SECT über die Gatterschaltung GS3 unabhängig von der bistabilen Kippstufe SEQRUN angelassen werden kann, wenn ein Transfer im Streaming-Verfahren durchgeführt werden soll und das Signal SMC vorliegt, das die bistabile Kippstufe STVAL (FIG 6) setzt. Das Signal STVAL bewirkt einerseits die Umschaltung zwischen den beiden Steuerschaltkreisen, andererseits nimmt es Einfluß auf die Adressierung des Steuerspeichers PROM, indem zum einen die von den beiden höchstwertigen Ausgängen des Ablaufzählers SECT gebildeten Adressierleitungen durch den Multiplexer MUX-AD fest auf das dem Signal "1" entsprechende Potential geschaltet und zum anderen die Gatterschaltungen GS6 und GS7 für die zweite Gruppe der Adressenleitungen des Speichers PROM umgesteuert werden. Aufgrund der so geänderten Adressierung ergeben sich zwangsläufig geänderte Ablauffolgen für das Streaming-Verfahren bei weitgehender Ausnutzung der bereits vorhandenen Ablaufsteuerung TK-ST. Dabei wird die Kippstufe STRUN gesetzt und damit der Ablaufzähler SECT freigegeben, wenn nach Abschluß der Einleitungsphase für den Datentransfer gemäß FIG 4 bei einer Datenausgabe - Signal OUTPUT liegt vor - eine eingephaste Bedienungsanforderung SRPH der angesteuerten peripheren Einheit vorliegt, oder wenn bei Dateneingabe - Signal INPUT liegt vor - wenigstens ein Datenwort in den zusätzlichen Pufferspeicher INBUF eingespeichert ist, also das Signal ENTEX = 0 zu Null wird.

Während der Dateneingabe wird jedes übertragene Datenwort durch einen Gültigkeitsstrobe CESTB angezeigt, der über das Gatter U4, die Kippstufen CESTBPHO, CESTBPHI und ENTRYVAL zu den Steuersignalen CLEN und STBFWE an der Gatterschaltung GS8 für den zusätzlichen Pufferspeicher INBUF (FIG 3) führt.

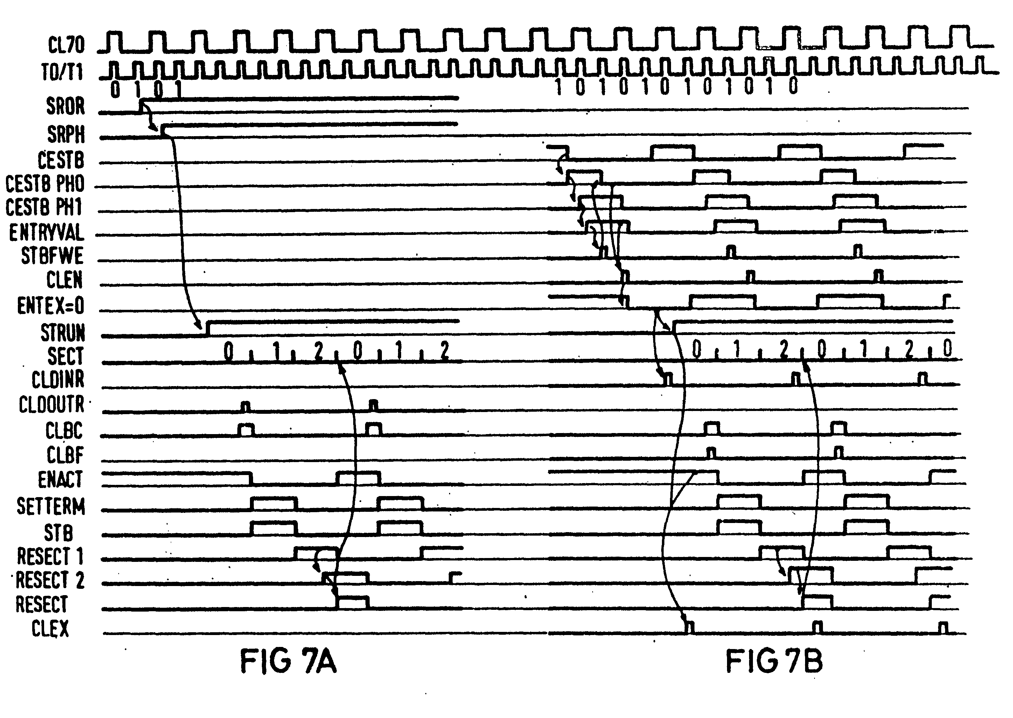

FIG 7A und 7B zeigen die zugehörigen Impulsdiagramme für den bisher erläuterten zusätzlichen Teil der Ablaufsteuerung TK-ST gemäß FIG 5, und zwar FIG 7A für den Start einer Datenausgabe und FIG 7B für den Start einer Dateneingabe. Gezeigt sind dabei neben den notwendigen Signalen der Grundtakt CL70 und der Hilfstakt T0/T1, wcbei die Taktimpulse T0 immer während eines Impulses und die Taktimpulse T1 immer während einer Impulspause des Grundtaktes CL70 auftreten.

Bei der Datenausgabe nach FIG 7A erfolgt der Start wie bereits erwähnt, mit einer ermittelten Bedienungsanforderung SROR der angesteuerten peripheren Einheit PE, die eingephast mit der Rückflanke der Taktimpulse des Grundtaktes CL70 zu SRPH wird und über die Gatterschaltung GS5 die Kippstufe STRUN setzt. Der Ablaufzähler SECT kann damit über die Gatterschaltung GS3 anlaufen und macht je Zählzyklus die Schritte 0 1 und 2 in fortlaufender Folge, bis das Ende des Datentransfers angezeigt wird oder eine Unterbrechung auftritt.

Das Ende des Zählzyklus wird jeweils durch das Steuersignal RESECT1 im Zählschritt 2 des Ablaufzählers SECT bestimmt, das von der entsprechenden Registerstufe des Registers ROMREG (FIG 5) geliefert wird. Dadurch wird die Kippstufe RESECT2 gesetzt und über die UND-Glieder U1 und U2 das Rücksetzsignal RESECT ausgelöst, das mit Beginn des Zählschrittes 3 des Zählers SECT zusammenfällt und diesen daher infolge der Rückflankensteuerung durch die Impulse des Taktes CL70 nicht wirksam werden läßt.

Jeweils während der einzelnen Zählschritte 0 bis 2 des Ablaufzählers SECT werden dann die jeweils im Speicher PROM festgelegten Steuersignale ausgelöst. Es sind dies
- während des Zählschrittes 0 das Steuersignal CLDOUTR für die Übernahme des jeweiligen Datenwortes aus dem Pufferspeicher BUF A/B der Kanalsteuerung CHn (FIG 2) in das Ausgaberegister DOUTR der Zählimpuls CLBC für die schrittweise erfolgende Erniedrigung des Datenwortzählers BC für den Pufferspeicher BUF A/B und das Signal ENACT,
- während des Zählschrittes 1 das Signal SET TERM für die Einleitung der Abschlußphase eines Datentransfers durch die Kanalsteuerung und der Gültigkeitsstrobe STB zur Auslösung der Übernahme des im Ausgaberegister DOUTR bereitgestellten Datenwortes durch die angesteuerte periphere Einheit sowie

- im letzten Zählschritt 2 das bereits erläuterte Steuersignal RESECT1.

Alle diese Signale werden während eines jeden aufeinanderfolgenden Zählzyklus des Laufzählers SECT wiederholt. Dabei ist folgende Ausnahme beim jeweiligen Anlauf des Ablaufzählers SECT im vorliegenden Fall zu berücksichtigen: Wie bereits erwähnt, ist der erste Zählschritt der Zählschritt 0, der auch gegeben ist, wenn die Kippstufe STRUN noch nicht gesetzt ist. Alle während des Zählschrittes 0 ausgelösten Signale mit Ausnahme des Signales ENACT, also im vorliegenden Falle die Signale CLDOUTR und CLBC, dürfen daher nur im echten Zählschritt 0 ausgelöst werden. Das bereitet bei der gegebenen Folgesteuerung des Ablaufzählers SECT und des Registers ROMREG keine Schwierigkeiten, weil wegen des um eine Periode des Grundtaktes CL70 verschobenen Wirksamwerdens der Ausgangssignale des Registers ROMREG diese jeweils dem vorhergehenden Zählschritt des Ablaufzählers SECT zugeordnet sind. So wird beispielsweise das Signal RESECT1 zwar während des Zählschrittes 2 wirksam, die entsprechende Adressierung des Speichers PROM erfolgt aber schon während des vorhergehenden Zählschrittes 1. Entsprechend werden bereits während des letzten Zählschrittes 2 im Zyklus die während des ersten Zählschrittes 0 im Zyklus wirksamen Signale ausgewählt.

Da während eines laufenden Datentransfers am Ende eines jeden Zählzyklus immer dieselben Registerstufen des Registers ROMREG gesetzt oder rückgesetzt sind und während eines laufenden Datentransfers kein Wechsel zwischen Dateneingabe und Datenausgabe oder umgekehrt auftreten kann, werden auch nach einer Unterbrechung des Zählerlaufes über die Gatterschaltung GS4 bei einem jeden erneuten Anlaufen des Zählers SECT wegen der zusätzlichen Steuerung durch den Ausgang der Gatterschaltung GS3 immer dieselben benötigten Signalfolgen ausgelöst. Lediglich beim jeweiligen erstmaligen Anlaufen des Zählers SECT ist es wegen der nicht gezeigten Rückstellung des Registers ROMREG notwendig, während der Nullstellung des Zählers die benötigten Signale nachzubilden und Ersatzimpulse CLDOUTR2 und CLBC2 zu liefern. Dies wird durch die Gatterschaltung GS9 bewirkt, wenn wegen der Nullstellung des Zählers SECT das Signal SECT = 0 vorliegt und die Kippstufe STRUN

Bei der Dateneingabe gemäß FIG 7B steuern, wie bereits erläutert, die empfangenen Gültigkeitsstrobes CESTB den Ablauf. Als erstes wird mit jeder Rückflanke eines Impulses CESTB das mitgelieferte Datenwort in das Eingaberegister INREG übernommen. Des weiteren wird durch aufeinanderfolgendes Setzen der Kippstufen CESTBPH0, CESTBPH1 und ENTRYVAL am Ausgang der Gatterschaltung GS8 der Schreibimpuls STBFWE für die Übernahme des zwischengespeicherten Datenwortes in den zusätzlichen Pufferspeicher INBUF ausgelöst. Anschließend wird mit dem Steuerimpuls CLEN der Eingabeadreßzähler ENTCT (FIG 3) um einen Schritt erhöht und dadurch der Eingabespeicherplatz für das nachfolgende Datenwort im zusätzlichen Pufferspeicher INBUF bereitgestellt mit der Folge, daß das Signal ENTEX = 0 zu Null wird, da der Eingabe-und Ausgabeadreßzähler verschiedene Werte anzeigen. Das Signal

führt folglich über die Gatterschaltung GS5 (FIG 5) zum Setzen der Kippstufe STRUN und damit zum Start des Ablaufzählers SECT.

Abgesehen von der Anlaufphase werden bei den einzelnen Zählschritten 0, 1 und 2 folgende Steuersignale ausgelöst:

- beim Zählschritt 0 der Zähltakt CLBC für den Datenwortzähler des Pufferspeichers BUF A/B und der zugehörige Schreibimpuls CLBF sowie das Signal ENACT,
- beim Zählschritt 1 das Signal SET TERM für die Einleitung der Abschlußphase des Datentransfers durch die Kanalsteuerung und der Gültigkeitsstrobe STB als Quittungsimpuls für die periphere Einheit PE und
- beim Zählschritt 2 wiederum das Steuersignal RESECT1 und der Übernahmeimpuls CLDINR für das Aufnahmeregister DINR.

Das Setzen von ENACT im ersten Zählschritt 0 führt in Verbindung mit STRUN = 1 am Gatter U5 zum Zählimpuls CLEX für die Weiterschaltung des Ausgabeadreßzählers EXCT des Pufferspeichers INBUF (FIG 3).

Aus der starr einzuhaltenden Reihenfolge der Steuersignale CESTB, STBFWE, CLEN, CLDINR und CLEX für die Weiterleitung der über den Kanal eintreffenden Datenwörter über das Eingaberegister INPREG, den zusätzlichlichen Pufferspeicher INBUF an das Aufnahmeregister DINR wird ersichtlich, daß bereits vor Setzen der bistabilen Kippstufe STRUN ein Steuerimpuls CLDINR ausgelöst werden muß, damit der nachfolgende Steuerimpuls CLEX auf den Ausgabespeicherplatz im Pufferspeicher INBUF für das nachfolgende Datenwort weiterschalten kann. Dies bewirkt das Gatter U6 abhängig vom Ausgangssignal der Gatterschaltung GS5 und dem Hilfstakt T0 mit dem Hilfssignal CLDINR2, bevor die Kippstufe STRUN gesetzt wird.

Andererseits sind in gleicher Weise wie bei der Datenausgabe die während des ersten Zählschrittes 0 nach erstmaligem Anlaufen des Zählers SECT auszulösenden Signale CLBC und CLBF als Hilfssignale CLBC2 und CLBF2 wegen der bereits erwähnten vorlaufenden Adressierung des Steuerspeichers PROM nachzubilden, was wiederum durch die Gatterschaltung GS9 erfolgt.

Wie aus FIG 7A und 7B weiterhin ersichtlich ist, verkürzen die Hilfstaktimpulse T0 und T1 im

Vergleich zu den Taktimpulsen des Grundtaktes CL70 die Einphasungszeiten der Bedienungsanforderung SROR bei der Datenausgabe und die Dauer für die Weiterleitung der Datenwörter bei der Dateneingabe.

Da der weitere Ablauf, insbesondere der Abschluß des Datentransfers, in erhöhtem Maße vom Zusammenspiel einiger der bereits genannten Schnittstellensignale abhängig ist, sei zunächst anhand von FIG 6 der restliche in diesem Zusammenhang interessierende Schaltungsteil der Ablaufsteuerung TK-ST erläutert. Es ist dies die ergänzende Steuerung für die Erzeugung des Schnittstellensignals TERM, das eine Beendigung des Datentransfers durch die Kanalsteuerung CHn anzeigt und des zusätzlichen Schnittstellensignals CHREQ zur Kennzeichnung der Empfangsbereitschaft der Kanalsteuerung bei Dateneingabe- Beide Schnittstellensignale werden in an sich bekannter Weise von gleich bezeichneten Kippstufen abgegeben.

Gesetzt wird die Kippstufe CHREQ bei Dateneingabe-Signal INPUT liegt vor - über die Gatterschaltung GS10, solange normalerweise kein Signal END eintrifft und ein vorgegebener Füllstand des zusätzlichen Pufferspeichers INBUF nicht überschritten ist, damit genügend Platz für die Zwischenspeicherung von Datenwörtern gegeben ist. Das Signal ENTEX = 0 kennzeichnet einen vollkommen leeren Pufferspeicher und das Signal ENTEX = 2 in Verbindung mit SHOCA bei kurzen Kanalstrecken einen mit zwei Datenwörtern belegten Pufferspeicher INBUF. Bei kürzeren Kanülstrecken kann also nach einer Überschreitung der das Rücksetzen der Kippstufe CHREQ bewirkenden Füllstände das Setzsignal früher ausgelöst werden, da wegen der geringeren Anzahl von möglicherweise noch nachlaufenden Datenwörtern ein entsprechend geringerer Speicherplatzbedarf im Pufferspeicher besteht. Die Auswertung der Setzbedingungen erfolgt in diesem Falle durch das Gatter U8 und U9. Liegt dagegen das Signal END vor, dann bleibt die Kippstufe CHREQ solange gesetzt, bis der Pufferspeicher INBUF vollkommen entleert ist und das Signal ENTEX = 0 wieder erscheint.

In ähnlicher Weise wie das Setzen wird auch das Rücksetzen der Kippstufe CHREQ durch die Füllstandssignale gesteuert,und zwar über die Gatterschaltung GS11 mit den Signalen ENTEX = 2 und ENTEX = 4 in Verbindung mit dem Signal SHOCA, solange das Signal END nicht ansteht, und mit dem Signal ENTEX = 0, wenn das Signal END vorliegt. Die Abhängigkeit vom Signal END wird dabei mit der Gatterschaltung GS12 überwacht.

Nach Setzen der Kippstufe CHREQ können also immer zwei Datenwörter vom Eingabepuffer INBUF aufgenommen werden, bevor möglicherweise zurückgesetzt wird, damit genügend Speicherkapazität für nachlaufende Datenwörter bereitgehalten wird. Bei einem Pufferspeicher mit insgesamt acht Speicherplätzen sind das demzufolge 6 bzw. 4 Speicherplätze.

Neben der elastischen Steuerung durch die Füllstandssignale des Eingabepuffers INBUF ist weiterhin eine Steuerungsmöglichkeit durch das Endesignal TERM gegeben, sobald die bistabile Kippstufe TERM gesetzt ist, damit, wie später noch erläutert werden wird, das Aussenden von Quittungsimpulsen STB gegenüber der peripheren Einheit PE gekennzeichnet wird.

Auch bei einer Sendeunterbrechung durch die periphere Einheit kann die Kippstufe CHREQ zurückgesetzt werden, indem die Abstände zwischen den eintreffenden Gültigkeitsstrobes CESTB überwacht werden. Dies erfolgt mit dem Verzögerungsglied VZ und dem UND-Glied U10 (FIG 5).

Die Kippstufe TERM wird über das Gatter U7 gesetzt, wenn das Ende des Datentransfers mit dem Signal BC = 0 angezeigt wird und zusätzlich das Steuersignal SET TERM am Ausgang des Registers ROMREG erscheint. Gleichzeitig wird die Kippstufe INHSRC gesetzt, die über die Gatterschaltung GS5 (FIG5) die Freigabe des Ablaufzählers SECT aufrecht erhält, damit gegebenenfalls noch eintreffende Datenwörter aufgenommen und quittiert werden können.

Das Ausgangssignal der Kippstufe TERM wird in einem Schieberegister S-REG gespeichert und mit den Taktimpulsen T0 weitergeschoben, wobei mit dem Schiebeausgang 1 über die Gatterschaltung GS10 die Kippstufe CHREQ zum Abschluß noch einmal gesetzt wird, falls sie nicht mehr gesetzt ist, und mit dem Schiebeausgang 2 die Kippstufe TERM wieder zurückgesetzt wird. Außerdem wird mit dem Schiebeausgang 4 eine Verzögerungsschaltstüfe MFF angestoßen, dia nach Ablauf einer vorgegebenen, die maximale Anzahl nachlaufender Datenwörter auf der Kanalleitüng überbrückenden Zeitdauer einen kürzen Steuerimpuls liefert, der die Kippstüfe INHSRC und danach die Kippstüfe CHREQ zurücksetzt.

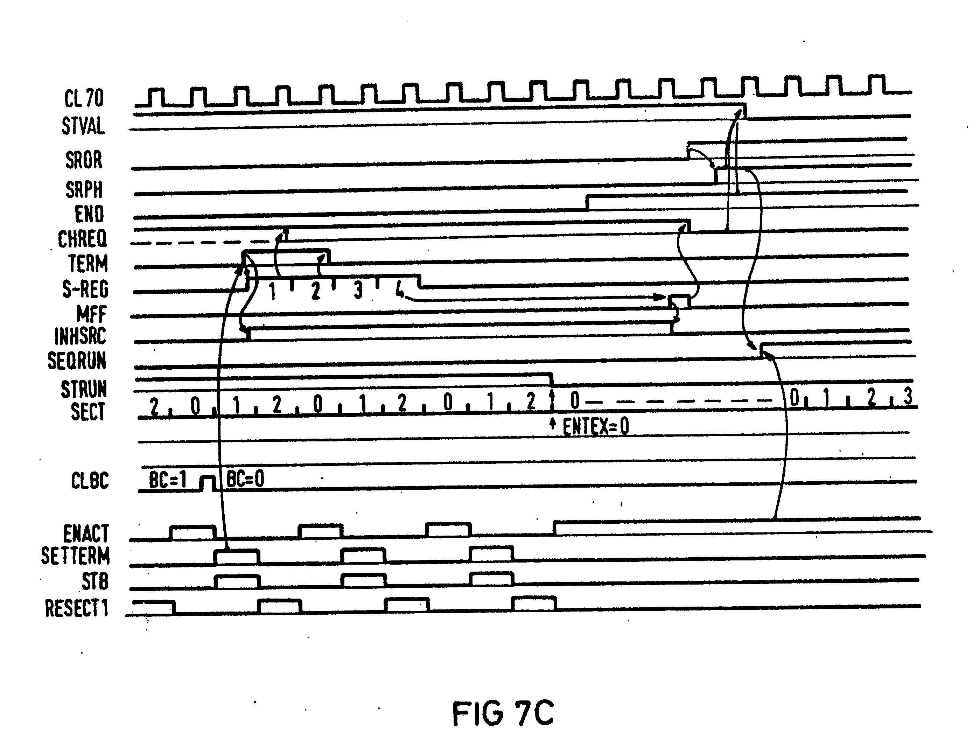

FIG 7C zeigt ausgehand von den Impulsdiagrammen gemäß FIG 7A oder 7B die Überleitung in die Abschlußphase des Datentransfers, wenn nach einen Zählimpuls CLBC für den Datenwortzähler des Püfferspeichers BUF A/B (FIG 2) das Übertragungsende mit BC = 0 erkannt wird. Dieses Signal führt zusammen mit den Steuersignalen SET TERM am Ausgang des Registers ROMREG während des Zählschrittes 1 zum Setzen der bistablien Kippstufe TERM über das Gatter U7 (FIG 6) und damit zur Abgabe des Schnittstellensignals TERM an die periphere Einheit PE. Gleichzeitig wird die Kippstufe INHSRC gesetzt und das Schieberegister S-REG angestoßen. Bedingt durch das Signal INHSRC wird über die Gatterschaltung 5, wie bereits erläutert, die Kippstufe STRUN gegebenenfalls gesetzt gehalten, bis das Signal ENTEX = 0 eintrifft, so daß der Ablaufzähler SECT gegebenenfalls noch weiterlaufen kann.

Sobald der durch den Schiebeausgang 4 des Registers S-REG ausgelöste Steuerimpuls der Verzögerungsschaltstufe MFF auftritt, wird das Signal INHSRC und danach das Empfangsbereitschaftssignal CHREQ abgeschaltet. Letzteres führt dann mit den Signalen END und SRPH in der Abschlußphase über das Gatter U11 (FIG 6) zur Rücksetzung der Kippstufe STVAL und damit zur Umschaltung vom zweiten Steuerschaltkreis auf den ersten Steuerschaltkreis mit Setzen der Kippstufe SEQRUN und zur Überleitung in die Abschlußunterbrechung.

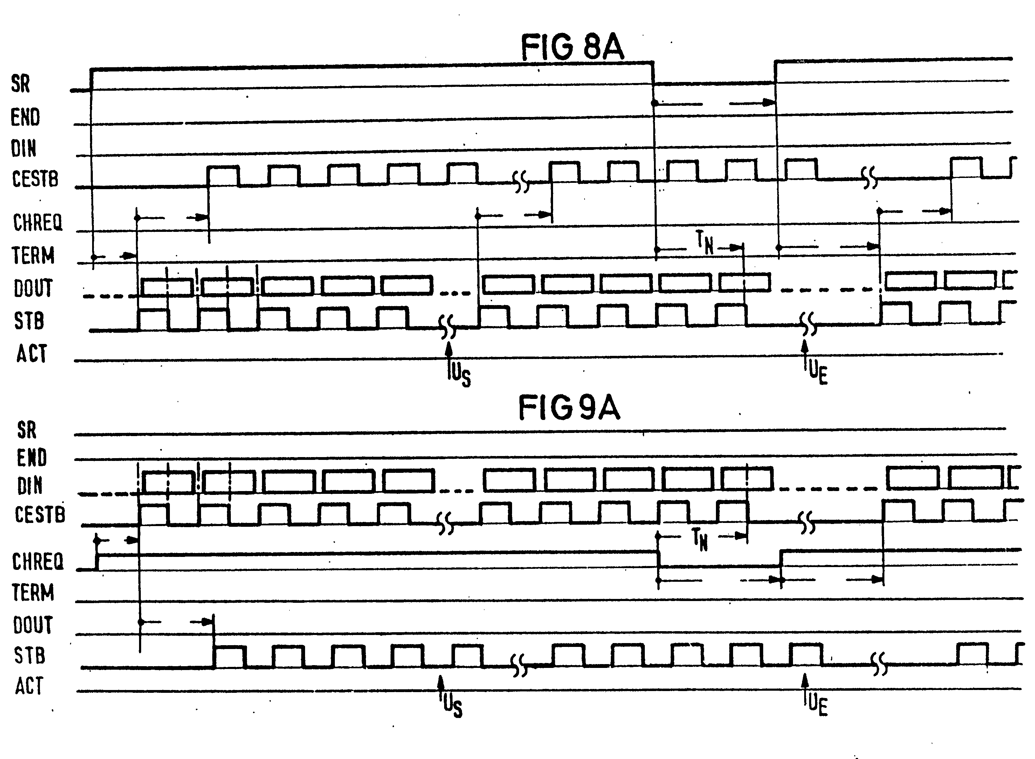

Abschließend sei anhand von FIG 8A bis 8C der Ablauf eines Datetransfers bei der Datenausgabe in Fortsetzung des Zeitdiagramms von FIG 4 näher erläutert. In diesem Falle ist die Kanalsteuerung CHn Sender und die ausgewählte periphere Einheit PE Empfänger.

Nach Empfang des Transferbefehles OPCMD antwortet die periphere Einheit mit der Bedienungsanforderung SR, die die Empfangsbereitschaft kennzeichnet. Gemäß FIG 5 wird dadurch die Ablaufsteuerung angelassen und es werden fortlaufend Datenwörter DOUT ausgesendet. Die zugehörigen Gültigkeitsstrobes STB sind dabei so angeordnet, daß die Rückflanken mit der Datenwortmitte zusammenfallen und diese somit die Übernahme in der peripheren Einheit direkt steuern können. Als Quittung für jedes empfangene Datenwort sendet die periphere Einheit PE Quittungsimpulse CESTB zur Kanalsteuerung CHn zurück, die dort in an sich bekannter Weise gezählt und am Ende eines Datentransfers mit der ausgesendeten Anzahl von Stroboimpulsen STB verglichen werden, so daß der Sender die Übertragungsstrecke auf Datenverluste prüfen kann.

Wird aus irgendeinem Grunde - wie bei $U_S$ gezeigt - die Aussendung unterbrochen, weil z.B. von einer Pufferhälfte des Speichers BUF A/B (FIG 2) auf die andere umgeschaltet werden muß oder dergleichen, dann wird dies durch Auslassen wenigstens eines Stroboimpulses STB gekennzeichnet. Umgekehrt kann die periphere Einheit PE die Datenwortübertragung als Empfänger durch kurzzeitiges Wegschalten der Bedienungsanforderung SR unterbrechen, wobei die Dauer der Abschaltung wenigstens einer Impulsperiode des Datenstrobes entsprechen muß. Bedingt durch die Laufzeit der Kanalstrecke muß der Empfänger mit einem Nachlauf $T_N$ von z.B. maximal sechs Datenwörtern rechnen, bis die Unterbrechung auf der Sendeseite wirksam wird und die Datenaussendung gestoppt ist - gekennzeichnet durch $U_E$. Trotz der Unterbrechung werden die notwendigen Quittungsstrobes CESTB zurückgesendet.

FIG 9A zeigt analog die Dateneingabe, d.h. mit der peripheren Einheit PE als Sender und der Kanalsteuerung CHn als Empfänger. Anstelle der Bedienungsanforderung SR löst daher das Empfangsbereitschaftssignal CHREQ der Kanalsteuerung die Übertragung der Datenwörter DIN aus, die von den Gültigkeitsstrobes CESTB begleitet werden. Bezüglich der Unterbrechung gelten dabei in analoger Weise die bereits in Verbindung mit FIG 8A genannten Bedingungen.

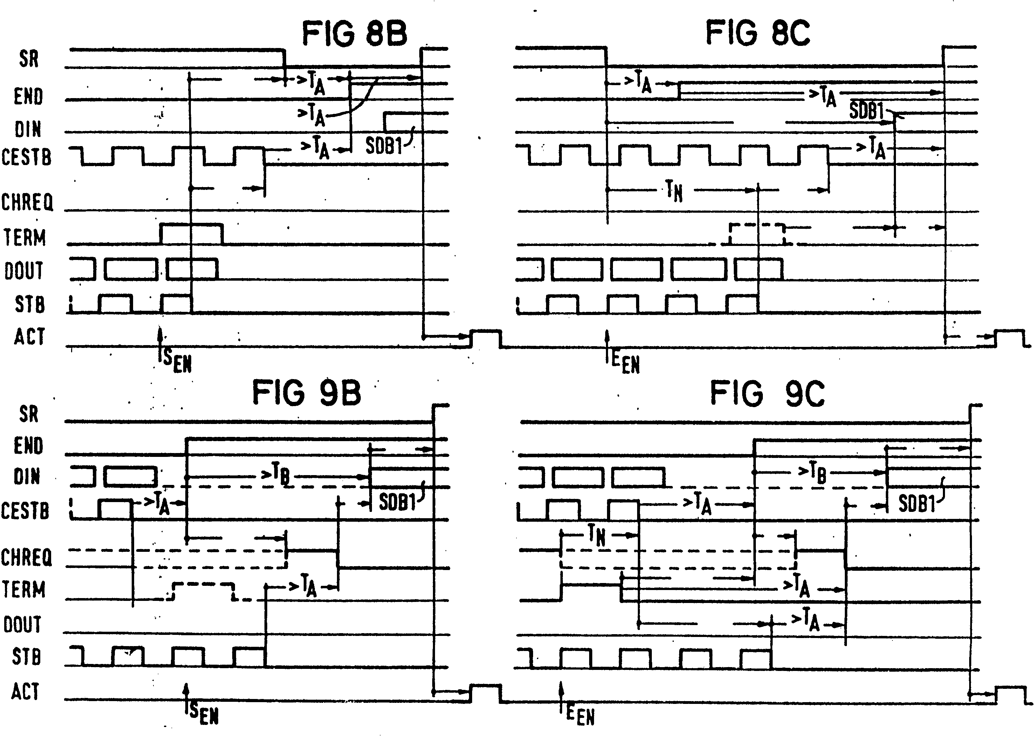

In Fortsetzung von FIG 8A zeigt FIG 8B die durch den Hinweis $S_{EN}$ gekennzeichnete Beendigung das Datentransfers durch die sendende Kanalsteuerung CHn, indem das Schnittstellensignal TERM zusammen mit den letzten Datenwort gewendet wird. Dies führt bei der peripheren Einheit PE zur Abschaltung der Bedienungsanforderung SR, wenn der letzte notwendige Quittungsimpuls CESTB gesendet ist, und nach Ablauf einer nachfolgenden Mindestdauer $T_A$ zur Abgabe des Endesignals END. Nachfolgend wird dann wieder die Bedienungsanforderung SR und zusätzlich das Gerätestatuswort SDB1 angeschaltet und damit in an sich bekannter Weise der Abschlußzyklus angefordert, was von der Kanalsteuerung mit dem Signal ACT quittiert wird.

In ähnlicher Weise verläuft auch die mit $E_{EN}$ gekennzeichnete Beendigung durch die periphere Einheit als Empfänger bei FIG 8C. In diesem Falle wird das Ende durch Abschalten der Bedienungsanforderung SR und durch das nachfolgende Einschalten des Endesignals END angezeigt. Dabei muß möglicherweise noch mit einem Nachlauf $T_N$ von z.B. maximal sechs Datenwörtern gerechnet werden, die ebenfalls zu quittieren sind. Erkennt die Kanalsteuerung nach der Rückflanke von SR noch eine Endebedingung, so wird mit dem letzten ausgesendeten Datenwort DOUT auch das Signal TERM übertragen, was gestrichelt angedeutet ist. Wegen des Nachlaufs $T_N$ kann ein erneutes Anschalten von SR und die Bereitstellung des Gerätestatuswortes SDB1 zur Überleitung in den Abschlußzyklus jedoch erst nach Ablauf einer vorgegebenen Mindestdauer $T_A$ nach der Vorderflanke des Signals END bzw. nach der Rückflanke des letzten Quittungsimpulses CESTB erfolgen.

FIG 9B zeigt in Fortsetzung von FIG 9A für die Dateneingabe die Signalfolge bei Beendigung des Datentransfers durch die periphere Einheit als Sender. Frühestens nach Ablauf der Zeitdauer $T_A$ nach der Rückflanke des das letzte gesendete Datenwort DIN begleitenden Gültigkeitsstrobes CESTB wird dabei das Endesignal END gesetzt. Hat die Kanalsteuerung CHn als Empfänger zu Beginn der Vorderflanke des Signals END sein Anforderungssignal SHREQ gesetzt, so überlapt dieses möglicherweise das Signal TERM infolge einer in der Kanalsteuerung noch erkannten Endebedingung. Das Signal CHREQ kann dann frühestens nach Ablauf der Zeitdauer $T_A$ nach der Rückflanke des Signals TERM oder des letzten Quittungsimpulses STB abgeschaltet werden. War andererseits das Signal CHREQ nicht gesetzt, so muß die Kanalsteuerung nach Erkennen der Vorderflanke von END das Signal CHREQ noch einmal anschalten, wenn noch Quittungsimpulse STB oder infolge einer noch erkannten Endebedingung das Signal TERM zu senden sind. In jedem Falle kann die periphere Einheit PE frühestens nach Ablauf der Mindestdauer $T_B$ nach Beginn des Signals END und nach Abschalten des Signals CHREQ das Gerätestatuswort SDB1 bereitstellen und die Bedienungsanforderung SR für die Überleitung in den Abschlußzyklus setzen.

FIG 9C unterscheidet sich von FIG 9B wiederum dadurch, daß die Beendigung des laufenden Datentransfers nicht vom Sender, sondern von der als Empfänger arbeitenden Kanalsteuerung CHn mit dem Signal TERM ausgelöst wird, wobei wiederum in einem Nachlauf $T_N$ für z.B. maximal 6 Datenwörtern zu rechnen ist. Unmittelbar nach Erkennen des Signals TERM in der peripheren Einheit wird die Auswendung der Datenwörter DIN gestoppt und frühestens nach Ablauf der Mindestzeitdauer $T_A$ das Signal END gesetzt. Das Signal CHREQ überdauert das Signal TERM bzw. den letzten Quittungsimpuls STB ebenfalls wieder um die Mindestdauer $T_A$ und frühestens nach Ablauf der Mindestdauer $T_B$ nach Setzen des Signals END kann die periphere Einheit das Gerätestatuswort SDB1 bereitstellen und die Bedienungsanforderung SR abgeben, wenn das Signal CHREQ zurückgesetzt ist.

In allen vier beschriebenen Fällen wird unabhängig davon, von welcher Seite die Beendigung eines laufenden Datentransfers eingeleitet wird, durch Setzen des Signals END in der peripheren Einheit PE mit nachfolgender Bereitstellung des Gerätestatuswortes SDB1 und Setzen der Bedienungsanforderung SR in bekannter Weise in den Abschlußzyklus durch die Ablaufsteuerung TK-ST übergeleitet. Die Durchführung des Streaming-Verfahrens ist damit nahtlos in die bisherigen Schnittstellenabläufe mit nur geringem zusätzlichem Aufwand innerhalb der Kanalsteuerung und insbesondere der den kanalseitigen Transfer steuernden Ablaufsteuerung TK-ST integrierbar.

Außerdem sei noch einmal darauf hingewiesen, daß die Darstellung zu dem beschriebenen Ausführungsbeispiel auf die für das Verständnis der Erfindung erforderlichen Schaltungseinzelheiten beschränkt worden ist, so sind z.B. nicht alle Schaltkreise für die genannten Schnittstellensignale und für das Zusammenarbeiten der Ablaufsteuerung TK-ST mit den übrigen Einrichtungen der Kanalsteuerung CHn und dem übergeordneten Kanalwerk näher dargestellt. Diese können in bekannter Weise realisiert sein, beispielsweise in Anlehnung an die genannten Druckschriften.

**Patentansprüche**

1. Verfahren zur Durchführung von kontinuierlichen Datentransfers im Streaming-Verfahren über einen eine periphere Einheit (PE) mit der Kanalsteuerung (CHn) eines Ein-/Ausgabewerkes (IOP) verbindenden Selektor- oder Blockmultiplexkanal im Rahmen von auszuführenden Ein/Ausgabeoperationen einer Datenverarbeitungsanlage unter Verwendung einer Kanalsteuerung (CHn) mit einem Pufferspeicher (BUF A/B) mit vorgeschaltetem Aufnahmeregister (DINR) für über den Kanal eintreffende Daten, in dem die zu übertragenden bzw. übertragenen Daten vorübergehend zwischengespeichert werden, und mit einer Ablaufsteuerung (TK-ST) für den kanalseitigen Datentransfer, dadurch gekennzeichnet,

- daß während der Einleitungsphase eines Datentransfers Datentransfers im Streaming-Verfahren durch ein zusätzliches Schnittstellensignal (SMC) auf einer bisher nicht benötigten Schnittstellenleitung von der Kanalsteuerung (CHn) angezeigt wird,

- daß die tatsächliche Durchführung des Streaming-Verfahrens von der rechtzeitigen Abgabe einer Bestätigungsmeldung der peripheren Einheit (PE) durch ein vorgegebenes Schnittstellensignal (z.B. Abschalten von RDY) abhängig ist, wobei bei rechtzeitiger Bestätigungsmeldung das zusätzliche Schnittstellensignal (SMC) aufrecht erhalten bleibt und die Durchführung des Datenverkehrs im Streaming-Verfahren sichert, während bei nicht rechtzeitiger Bestätigungsmeldung das zusätzliche Schnittstellensignal (SMC) wieder abgeschaltet wird,

- daß bei tatsächlicher Durchführung des Streaming-Verfahrens die von der peripheren Einheit (PE) gesendeten Daten (DIN) über einen dem Aufnahmeregister (DINR) vorgeschalteten zusätzlichen Pufferspeicher (INBUF) mit eigenem kanalseitigem Eingaberegister (INPREG) geleitet werden und

- daß auch alle während des Streaming-Verfahrens von der peripheren Einheit (PE) übertragenen Daten (DIN) von einem Gültigkeitsstrobe (CESTB) begleitet werden, der die Übernahme der empfangenen Daten in das Eingaberegister (INPREG) und in Verbindung mit der Ablaufsteuerung (TK-ST) die Weiterleitung zum Aufnahmeregister (DINR) über den zusätzlichen Pufferspeicher (INBUF) und von da in den eigentlichen Pufferspeicher (BUF A/B) steuert.

2. Verfahren nach Anspruch 1, dadurch gekennzeichnet, daß das zusätzliche Schnittstellensignal (SMC) nach Aufruf (TRAC + SEL + STB = 1) der peripheren Einheit (PE) durch die Kanalsteuerung (CHn) und nach Rückmeldung der Geräteadresse (DV-AD) abgegeben wird und daß als Bestätigungsrückmeldung die rechtzeitige Abschaltung des nach einem Aufruf durch die Kanalsteuerung (CHn) von der peripheren Einheit (PE) gesendeten Antwortbereitschaftssignals (RDY) vor dem Wirksamschalten des nachfolgenden ersten Transferbefehles (OPCMD mit STB = 1) an die periphere Einheit (PE) nach Auswertung des übertragenen Gerätestatuswortes (SDB1) gewertet wird.

3. Verfahren nach Anspruch 1 oder 2, dadurch gekennzeichnet, daß die Ausführung eines Datentransfers im Streaming-Verfahren (SMC = 1) in der einen oder anderen Richtung abhängig von dem der Kanalsteuerung (CHn) und der peripheren Einheit (PE) mitgeteilten Transferbefehl (OPCMD) jeweils mit dem Wirksamschalten eines die Empfangsbereitschaft der jeweiligen Empfangsseite (PE bzw. CHn) anzeigenden Anforderungssignals (SR bzw. CHREQ) auf einer der Schnittstellenleitungen erfolgt und daß das Anforderungssignal jeweils solange bestehen bleibt, bis das Ende des eingeleiteten Datentransfers erreicht ist oder eine Unterbrechung erzwungen wird.

4. Verfahren nach Anspruch 3, <u>dadurch gekennzeichnet</u>, daß die Sendeseite (CHn bzw. PE) der Empfangsseite (PE bzw. CHn) eine Unterbrechung des Datentransfers durch das Nichtsenden von Gültigkeitsstrobes (STB bzw. CESTB) für eine vorgegebene Zeitdauer anzeigt, während eine Unterbrechung durch die jeweilige Empfangsseite (PE bzw. CHn) der jeweiligen Sendeseite (CHn bzw. PE) unmittelbar durch vorübergehendes Abschalten des die Empfangsbereitschaft kennzeichnenden Anforderungssignals (SR bzw. CHREQ) angezeigt wird.

5. Verfahren nach einem der Ansprüche 1 bis 4, <u>dadurch gekennzeichnet</u>, daß alle auf der jeweiligen Empfangsseite (PE bzw. CHn) eintreffenden Gültigkeitsstrobes (STB bzw. CESTB) durch zur jeweiligen Sendeseite (CHn bzw. PE) zurückgesandte Quittungsimpulse bestätigt werden.

6. Verfahren nach Anspruch 5, <u>dadurch gekennzeichnet</u>, daß als Quittungsimpulse die jeweils beim Senden zur Verfügung stehenden Gültigkeitsstrobes (CESTB bzw. STB) verwendet werden.

7. Verfahren nach Anspruch 5 oder 6, <u>dadurch gekennzeichnet</u>, daß auf der jeweiligen Sendeseite (CHn bzw. PE) sowohl die ausgesendeten Gültigkeitsstrobes (STB bzw. CESTB) als auch die empfangenen Quittungsimpulse (CESTB bzw. STB) gezählt und die erhaltenen Zählergebnisse am Ende eines jeden Datentransfers miteinander verglichen werden, wobei bei ungleichen Zählergebnissen eine Fehlerbehandlung ausgelöst wird.

8. Verfahren nach einer der Ansprüche 5 bis 7, <u>dadurch gekennzeichnet</u>, daß bei einer Unterbrechung des Datentransfers durch die Kanalsteuerung (CHn) als Empfänger infolge Sperrung des die Datenwörter (DIN) aus dem zusätzlichen Pufferspeicher (INBUF) übernehmenden Pufferspeichers (BUF A/B) die Aussendung von Quittungsimpulsen (STB) unterbunden wird und diese während einer nachfolgenden Sendeunterbrechung durch die periphere Einheit (PE) oder spätestens vor Abschluß des Datentransfers nachgesendet werden.

9. Verfahren nach einem der Ansprüche 3 bis 8, <u>dadurch gekennzeichnet</u>, daß bei Überschreiten eines vorgegebenen Füllstandes (z.B. ENTEX = 0 oder 2 oder 4) des zusätzlichen Pufferspeichers (INBUF) peripheren Einheit (PE) zur Kanalsteuerung (CHn) unterbrochen wird, indem das die Empfangsbereitschaft der Kanalsteuerung (CHn) kennzeichnende Anforderungssignal (CHREQ) vorübergehend abgeschaltet wird.

10. Verfahren nach Anspruch 9, <u>dadurch</u>

gekennzeichnet, daß die über den vorgegebenen Füllstand (z.B. ENTEX = 2 oder 4) des zusätzlichen Pufferspeichers (INBUF) in der Kanalsteuerung (CHn) hinausgehende Speicherkapazität auf die nach einer erfolgten Unterbrechung durch die Kanalsteuerung (CHn) noch zu erwartende Anzahl von Datenwörter (DIN) abgestellt ist.

11. Verfahren nach Anspruch 9 oder 10, <u>dadurch gekennzeichnet</u>, daß der vorgegebene steuernde Füllstand (z.B. ENTEX = 2) veränderbar ist.

12. Verfahren nach einem der Ansprüche 3 bis 11 <u>dadurch gekennzeichnet</u>, daß die Beendigung des Datentransfers durch eine der beiden Seiten (CHn bzw. PE) der jeweils anderen Seite (PE bzw. CHn) durch die üblicherweise das Übertragungsende anzeigenden und in die Abschlußphase des Datentransfers überleitenden Schnittstellensignale (TERM bzw. END) mitgeteilt wird, daß bei einer Beendigung des Datentransfers durch die jeweilige Sendeseite (CHn bzw. PE) auf der Empfangsseite (PE bzw. CHn) nach Aussenden der restlichen Quittungsimpulse (CESTB bzw. STB) das die Empfangsbereitschaft kennzeichnende Anforderungssignal (SR bzw. CHREQ) als Quittung für die Endeerkennung abgeschaltet und anschließend in die Abschlußphase des Datentransfers übergeleitet wird und daß bei einer Endemarkierung durch die jeweilige Empfangsseite (PE bzw. CHn)auf der Sendeseite (CHn bzw. PE) die laufende Datenaussendung beendet wird, während auf der Empfangsseite (PE bzw. CHn) erst nach Aussenden des letzten Quittungsimpulses (CESTB bzw. STB) die endgültigen Voraussetzungen für die Einleitung der Abschlußphase bei Einhaltung vorgegebener Mindestzeiten ($T_A$, $T_B$) geschaffen werden.

13. Verfahren nach Anspruch 12, wobei die Einleitung der Abschlußphase eines Datentransfers durch die periphere Einheit (PE) mit erneuter Abgabe des die Empfangsbereitschaft kennzeichnenden Anforderungssignals (SR) erfolgt, <u>dadurch gekennzeichnet</u>, daß bei einer Beendigung des Datentransfers durch die periphere Einheit (PE) als Empfänger die Mindestzeit ($T_A$) für die Einleitung der Abschlußphase sowohl vom Beginn der Endemarkierung (END) als auch vom Ende des jeweils letzten ausgesendeten Quittungsimpulses (CESTB) an bemessen wird, während bei einer Beendigung des Datentransfers durch die Kanalsteuerung (CHn) als Empfänger die Mindestzeit ($T_B$) vom Beginn der Endemarkierung (END) durch die periphere Einheit (PE) an bemessen wird und die Abgabe des Anforderungssignales (SR) nur erfolgt, wenn nach Ablauf dieser Mindestzeit ($T_B$) das die Empfangsbereitschaft der Kanalsteuerung (CHn) kennzeichnende Anforderungssignal (CHREQ) abgeschaltet ist, das trotz der bereits erfolgten Endemarkierung (TERM) bis nach Aussendung des letzten Quittungsimpulses (STB) angeschaltet bleibt.

14. Anordnung zur Durchführung der Verfahren nach einem der Ansprüche 1 bis 13, gekennzeichnet
- durch einen zweiten Pufferspeicher (INBUF) mit kanalseitigem Eingaberegister (INPREG) neben dem vorhandenen Pufferspeicher (BUF A/B) und dem diesem vorgeschalteten Aufnahmeregister (DINR) für die Aufnahme von über den Kanal eintreffenden Daten (DIN) innerhalb der Kanalsteuerung (CHn), wobei das Eingaberegister (INPREG), der zusätzliche Pufferspeicher (INBUF) und das Aufnahmeregister (DINR) für die über den Kanal eintreffenden Daten (DIN) eine Reihenschaltung bilden,
- durch einen dem Aufnahmeregister (DINR) vorgeschalteten Auswahlschalter (MUX-DIN), der abhängig vom Vorliegen oder Nichtvorliegen des Betriebsartensignals für das Streaming-Verfahren (SMC) den Eingang des Aufnahmeregisters (DINR) wahlweise mit dem Ausgang des zusätzlichen Pufferspeichers (INBUF) oder direkt mit den Kanalleitungen (DIN) verbindet,
- durch Einrichtungen zur Aussendung bzw. Auswertung eines einen Datentransfer im Streaming-Verfahren anzeigenden Schnittstellensignales (SMC) und eines die Gültigkeit der von der peripheren Einheit (PE) gesendeten Daten (DIN) anzeigenden Schnittstellensignales (CESTB),
- durch Einrichtungen (DVP-ST) zur Auswertung des Abschaltezeitpunktes des Antwortbereitschaftssignals (RDY) der über den Kanal angesteuerten peripheren Einheit (PE) zwecks Feststellung der Ausführbarkeit des Datentransfers im Streaming-Verfahren,
- durch eine erweiterte Ablaufsteuerung (TK-ST) innerhalb der Kanalsteuerung (CHn) zur Durchführung des kanalseitigen Datentransfers, abhängig von der jeweils auszuführenden Ein-/Ausgabeoperation, die bei Ausführung des Datentransfers im Streaming-Verfahren auf eine entsprechende Arbeitsfolge zur selbständigen Steuerung des Daten- und Steuerinformationsaustausches über den Kanal während der Durchführung eines Datentransfers umschaltbar ist und
- Einrichtungen (CESTBPH0, CESTBPH1, U4, ENTRYVAL, GS8; U6, U5) zur Ableitung der Steuerimpulse (STBFWE, CLEN, CLDINR, CLEX) für die stufenweise erfolgende Weiterleitung der über den Kanal eintreffenden Daten (DIN) zum Pufferspeicher (BUF A/B) der Kanalsteuerung (CHn) abhängig von den die Daten (DIN) begleitenden Gültigkeitsstrobes (CESTB).

15. Anordnung nach Anspruch 14, gekennzeichnet durch Einrichtungen (U8, U9, GS11, GS10, GS12, CHREQ) zur Erzeugung und Auswertung eines die Empfangsbereitschaft der Kanalsteuerung (CHn) für die Datenentgegennahme kennzeichnenden Schnittstellensignals (CHREQ) innerhalb der Ablaufsteuerung (TK-ST).

16. Anordnung nach Anspruch 15, gekennzeichnet durch Einrichtungen (ENTEX) zur Überwachung des Füllstandes des zusätzlichen Pufferspeichers (INBUF), die zur Beeinflussung der Erzeugung des Empfangsbereitschaftssignals (CHREQ) der Kanalsteuerung (CHn) sowie der Ablauffolge für die Steuerung des Daten- und Informationsaustausches mit der Ablaufsteuerung (TK-ST) gekoppelt sind.

17. Anordnung nach einem der Ansprüche 14 bis 16, dadurch gekennzeichnet, daß die Ablaufsteuerung (TK-ST) einen zyklisch mit veränderbarer Zykluslänge arbeitenden Zähler (SECT) und zwei voneinander unabhängige Steuerschaltkreise (GS2, SEQRUN und GS5, STRUN) aufweist, von denen einer (GS5, STRUN) bei Durchführung des Datentransfers im Streaming-Verfahren (SMC= 1) und einer (GS2, SEQRUN) bei Durchführung von Datentransfers entsprechend den übrigen möglichen Übertragungsverfahren wirksam schaltbar ist, daß die Ausgänge des Zählers (SECT) mit einem Teil der Adresseneingänge eines Speichers (PROM) verbunden sind, so daß aufgrund der Speicherinhalte in den nacheinander angesteuerten Speicherabschnitten Ausgangssignale für die Ableitung der in einem Zählzyklus zu erzeugenden Steuer- und Schnittstellensignale geliefert werden, und daß ein Teil der höherwertigen Zählerausgangssignale für die Durchführung eines Datentransfers im Streaming-Verfahren auf festes Potential (z.B. "1") schaltbar ist, so daß infolge der damit verbunden Adressenverschiebung eine andere Gruppe von Speicherabschnitten im Steuerspeicher(PROM) ansteuerbar ist.

18. Anordnung nach Anspruch 16 und 17, dadurch gekennzeichnet, daß der Steuerschaltkreis (GS5, STRUN) zur Steuerung der Ablauffolge beim Streaming-Verfahren (SMC = 1) die Steuersignale der Füllstandsüberwachungseinrichtungen (ENTEX) für den zusätzlichen Pufferspeicher (INBUF) überwacht und den nachgeschalteten Zähler (SECT) jeweils solange Zählzyklus auf Zählzyklus ausführen läßt, bis unabhängig von vorliegenden Endebedingungen (z.B. BC =0) für den Datentransfer alle im zusätzlichen Pufferspeicher (INBUF) zwischengespeicherten Datenwörter (DIN) an den Pufferspeicher (BUF A/B) der Kanalsteuerung (CHn) weitergeleitet sind, wobei mit jedem Zyklus ein Gültigkeitsstrobe (STB) als Quittungsimpuls zur angeschlossenen peripheren Einheit (PE) gesendet wird.

**Claims**

1. A method of executing continuous data transfers in the streaming mode via a selector or block multiplex channel which connects a peripheral unit (PE) to the channel control unit (CHn) of an input/output unit (IOP) within the scope of input/output operations to be carried out in a data processing system, using a channel control unit (CHn) with a buffer store (BUF A/B) preceded by a receiving register (DINR) for data incoming via the channel, which receiving register temporarily intermediately stores the data which is to be transmitted or which has been transmitted, and with a flow control unit (TK-ST) for the channel-side data transfer, characterised in that

- during the introductory phase of a data transfer from the peripheral unit (PE) the execution of the data transfer in the streaming mode is indicated by an additional interface signal (SMC) on a previously unrequired interface line by the channel control unit (CHn),

- that the actual execution of the streaming mode is dependent upon the prompt emission or a confirmation message from the peripheral unit (PE) by a predetermined interface signal (e.g. disconnection of RDY), where, when the confirmation message is promptly given, the additional interface signal (SMC) is maintained and the execution of the data traffic in the streaming mode is safeguarded, whereas when the confirmation message is not promptly given the additional interface signal (SMC) is disconnected,

- that in the actual execution of the streaming mode, the items of data (DIN) transmitted from the peripheral unit (PE) are transmitted via an additional buffer store (INBUF) which precedes the receiving register (DINR) and which has its own, channel-end input register (INPREG) and

- that all the items of data (DIN) transmitted during the streaming mode from the peripheral unit (PE) are also accompanied by a validity strobe (CESTB) which controls the transfer of the received data into the input register (INPREG) and, in association with the flow control unit (TK-ST), controls the transfer to thee receiving register (DINR) via the additional buffer store (INBUF) and from there into the actual buffer store (BUF A/B).

2. A method as claimed in claim 1, characterised in that the additional interface signal (SMC) is emitted following the call-up (TRAC + SEL + STB = 1) of the peripheral unit (PE) by the channel control unit (CHn) and following the acknowledgement of the device address (DV-AD) and that the confirmation acknowledgement is represented by the prompt disconnection of the ready-to-respond signal (RDY) transmitted following a call-up by the channel control unit (CHn) from the peripheral unit (PE), prior to the actuation of the following, first transfer command (OPCMD with STB = 1) to the peripheral unit (PE) following the analysis of the transmitted device status word (SDB1).

3. A method as claimed in claim 1 or 2, characterised in that the execution of a data transfer in the streaming mode (SMC = 1) in the one or other direction takes place in dependence upon the transfer command (OPCMD) communicated to the channel control unit (CHn) and the peripheral unit (PE) on the actuation of a request signal (SR or CHREQ) which indicates the readiness for reception of the relevant receiving end (PE and CHn) on one of the interface lines and that the request signal is maintained until the end of the initiated data transfer has been reached or a compulsory interruption takes place.

4. A method as claimed in claim 3, characterised in that the transmitting end (CHn and PE) informs the receiving end (PE and CHn) of an interruption in the data transfer by the non-transmission of the validity strobes (STB and CESTB) for a predetermined length of time, whereas an interruption by the receiving end (PE and CH) is directly indicated to the transmitting end (CH and PE) by a temporary disconnection of the request signal (SR and CHREQ) which characterises readiness for reception.

5. A method as claimed in one of the claims 1 to 4, characterised in that all the validity strobes (STB and CESTB) incoming at the receiving end (PE and CHn) are confirmed by acknowledgement pulses which are returned to the transmitting end (CHn and PE)

6. A method as claimed in claim 5, characterised in that the validity strobes (CESTB and STB) available for transmission are used as acknowledgement pulses.

7. A method as claimed in claim 5 or 6, characterised in that at the transmitting end (CHn and PE) both the transmitted validity strobes (STB and CESTB) and also the received acknowledgement pulses (CESTB and STB) are counted and the counter results obtained are compared with one another at the end of each data transfer and in the event of non-identical counter results a fault correction process is initiated.

8. A method as claimed in one of the claims 5 to 7, characterised in that in the event of an interruption in the data transfer by the channel control unit (CHn) as receiver due to the blockage of the buffer store (BUF A/B) which receives the data words (DIN) from the additional buffer store (INBUF), the transmission of acknowledgement pulses (STB) is suppressed and these are retransmitted during a subsequent interruption in transmission by the peripheral unit (PE) or at the latest before the end of the data transfer.

9. A method as claimed in one of the claims 3 to 8, characterised in that when a predetermined level of fullness (e.g. ENTEX = 0 or 2 or 4) of the additional buffer store (INBUF) is exceeded in the channel control unit (CHn) the data transfer from the peripheral unit (PE) to the channel control unit (CHn) is interrupted in that the request signal (CHREQ) which characterises the readiness for reception of the channel control unit (CHn) is temporarily disconnected.

10. A method as claimed in claim 9, characterised in that the storage capacity which exceeds the predetermined level of fullness (e.g.ENTEX = 2 or 4) of the additional buffer store (INBUF) in the channel control unit (CHn) is tailored to the number of data words (DIN) which can be expected following an interruption by the channel control unit (CHn).

11. A method as claimed in claim 9 or 20, characterised in that the predetermined, controlling level of fullness (e.g. ENTEX = 2) is variable.

12. A method as claimed in one of the claims 3 to 11, characterised in that the termination of the data transfer by one of the two sides (CHn and PE) is communicated to the other side (PE and CHn) by the interface signals (TERM and END) which normally indicate the end of transmission and which initiate the terminating phase of the data transfer, that when the data transfer is terminated by the transmitting end (CHn and PE), at the receiving end (PE and CHn) following the transmission of the remaining acknowledgement pulses (CESTB and STB) the request signal (SR and CHREQ) which characterises readiness for reception is disconnected as acknowledgement that the end has been recognised and the terminating phase of the data transfer is then commenced, and that when the end is marked by the receiving end (PE and CHn), at the transmitting end (CHn and PE) continuous data transmission is terminated whereas at the receiving end (PE and CHn) not until following the transmission of the last acknowledgement pulse (CESTB and STB) are the final conditions fulfilled for the initiation of the terminating phase whilst adhering to predetermined minimum times $(T_A, T_B)$.

13. A method as claimed in claim 12, where the initiation of the terminating phase of a data transfer by the peripheral unit (PE) comprises a re-emission of the request signal (SR) which characterises readiness for reception, characterised in that when the data transfer is terminated by the peripheral unit (PE) as receiver, the minimum time $(T_A)$ for the initiation of the terminating phase is measured both from the beginning of the end mark (END) and from the end of the last transmitted acknowledgement pulse (CESTB), whereas when the data transfer is terminated by the channel control unit (CHn) as receiver, the minimum time $(T_B)$ is measured from the beginning of the end mark (END) by the peripheral unit (PE) and the request signal (SR) is emitted only on the disconnection - following the expiration of this minimum time $(T_B)$ - of the request signal (CHREQ) which characterises the readiness for reception of the channel control unit (CHn) and which, in spite of the fact that the end mark (TERM) has already been made, remains connected until the transmission of the last acknowledgement pulse (STB).

14. An arrangement for the execution of the method claimed in one of the claims 1 to 13, characterised
- by a second buffer store (INBUF) having a channel-side input register (INPREG) in addition to the existing buffer store (BUF A/B) and the preceding receiving register (DINR) for the reception of data (DIN) incoming via the channel, within the channel control unit (CHn), where the input register (INPREG), the additional buffer store (INBUF) and the receiving register (DINR) for the data (DIN) incoming via the channel form a series arrangement,
- by a selector switch (MUX-DIN) which precedes the receiving register (DINR) and which, in dependence upon the presence or absence of the operating mode signal for the streaming mode (SMC) connects the input of the receiving register (DINR) either to the output of the additional buffer store (INBUF) or directly to the channel lines (DIN),
- by devices for transmitting and analysing an interface signal (SMC) which indicates a data transfer in the streaming mode and an interface signal (CESTB) which indicates the validity of the data (DIN) transmitted from the peripheral unit (PE),
- by devices (DVP-ST) for analysing the disconnect time of the ready-to-respond signal (RDY) of the peripheral unit (PE) which is driven via the channel, in order to establish the feasibility of the data transfer in the streaming mode,
- by an extended flow control unit (TK-ST) within the channel control unit (CHn) which serves to execute the channel-end data transfer in dependence upon the input/output operation to be executed and which, when the data transfer is executed in the streaming mode, can be switched over to an appropriate operating sequence for the independent control of the data and control information exchange via the channel during the execution of a data transfer and
- devices (CESTBPH0, CESTBPH1, U4, ENTRYVAL, GS8; U6, U5) for obtaining the control pulses (STBFWE, CLEN, CLDINR, CLEX) for the stepped transfer of the data (DIN), incoming via the channel, to the buffer store (BUF A/B) of the channel control unit (CHn) in dependence upon the validity strobes (CESTB) which accompany the data (DIN).

15. An arrangement as claimed in claim 14, characterised by devices (U8, U9, GS11, GS10, GS12, CHREQ) which serve to produce and analyse an interface signal (CHREQ), which characterises the readiness for reception of the channel control unit (CHn) for the data reception within the flow control unit (TK-ST).

16. An arrangement as claimed in claim 15, characterised by devices (ENTEX) which serve to monitor the level of fullness of the additional buffer store (INBUF) which, in order to influence the production of the readiness for reception signal (CHREQ) of the channel control unit (CHn) and the flow sequence for the control of the data- and information exchange are coupled to the flow control unit (TK-ST).

17. An arrangement as claimed in one of the claims 14 to 16, characterised in that the flow control unit (TK-ST) comprises a counter (SECT) which operates in cyclic fashion with a variable cycle length and further comprises two control circuits (GS2, SEQRUN and GS5, STRUN) which are independent of one another and of which one (GS5, STRUN) can be activated when the data transfer is carried out in the streaming mode (SMC = 1) and one (GS2, SEQRUN) can be activated when the data transfer is carried out in accordance with the other possible transmission modes, that the outputs of the counter (SECT) are connected to a part of the address inputs of a store (PROM) so that, on the basis of the store contents in the consecutively operated storage sections, output signals are supplied for the acquisition of the control- and interface signals which are to be produced in a counting cycle, and that a part of the higher-value counter output signals for the execution of a data transfer in the streaming mode can be switched to fixed potential (e.g. "1") so that, as a result of the associated address shift, a different group of store sections can be operated in the control store (PROM).

18. An arrangement as claimed in claims 16 and 17, <u>characterised</u> in that in order to control the flow sequence in the streaming mode (SMC = 1) the control circuit (GS5, STRUN) monitors the control signals of the foremost monitoring devices (ENTEX) for the additional buffer store (INBUF) and causes the following counter (SECT) to execute counting cycle after counting cycle until, irrespectively of the prevailing end conditions (e.g. BC = 0) for the data transfer, all the data words (DIN) intermediately stored in the additional buffer store (INBUF) have been forwarded to the buffer store (BUF A/B) of the channel control unit (CHn), where, with each cycle, a validity strobe (STB) is transmitted as acknowledgement pulse to the connected peripheral unit (PE).

**Revendications**

1. Procédé pour réaliser le transfert continu de données selon le procédé streaming par l'intermédiaire d'un canal sélecteur ou d'un canal de multiplexage par blocs reliant une unité périphérique (PE) au dispositif (CHn) de commande de canal d'une unité d'entrée/sortie (IOP), dans le cadre d'opérations, devant être exécutées, d'entrée/sortie d'une installation de traitement de données, moyennant l'utilisation d'un dispositif (CHn) de commande de canal, comportant une mémoire tampon (BUF A/B), en amont de laquelle est branché un registre de réception (DINR) qui est prévu pour des données arrivant par l'intermédiaire du canal, et dans laquelle les données qui doivent être transmises ou qui sont transmises, sont mémorisées de façon transitoire, et comportant un dispositif de commande d'exécution (TK-ST) pour le transfert des données du côté du canal, caractérisé par le fait

- que pendant la phase de déclenchement d'un transfert de données de l'unité péripherique (PE), l'exécution du transfert des données selon le procédé streaming est affichée au moyen d'un signal d'interface supplémentaire (SMC) présent dans une ligne d'interface, non nécessaire jusqu'alors, du dispositif (CHn) de commande de canal,

- que la mise en oeuvre effective du procédé streaming dépend de la délivrance en temps opportun d'une signalisation de confirmation de l'unité périphérique (PE) au moyen d'un signal d'interface prédéterminé (débranchement de RDY), la signalisation de confirmation, transmise en temps opportun, maintenant le signal d'interface supplémentaire (S C) et garantissant l'exécution du trafic des données selon le procédé streaming, tandis que dans le cas d'une signalisation de confirmation, non exécutée en temps opportun, le signal d'interface supplémentaire (SMC) est à nouveau interrompu,

- que lors de la mise en oeuvre effective du procédé streaming, les données (DIN) émises par l'unité périphérique (PE) sont transmises par l'intermédiaire d'une mémoire tampon supplémentaire (INBUF) branchée en amont du registre de réception (DINR), avec un registre d'entrée particulier (INPREG) situé du côté du canal, et

- que, également toutes les données (DIN) qui sont transmise pendant le procédé streaming par l'unité périphérique (PE), sont accompagnées d'une inpulsion de validité (CESTB) qui commande la prise en charge des données reçues dans le registre d'entrée (INPREG) et, en liaison avec le dispositif de commande d'exécution (TK-ST), la retransmission au registre de réception (DINR) par l'intermédiaire de la mémoire de tampon supplémentaire (IN BUF) et, à partir de là, dans la mémoire tampon particulière (BUF A/B).

2. Procédé suivant la revendication 1, caractérisé par le fait que le signal d'interface supplémentaire (SNC) est délivré après appel (PRAC + SEL + SEB = 1) de l'unité périphérique (PE) par le dispositif (CHn) de commande de canal et après signalisation en retour de l'adresse (DV-AD) de l'appareil, et que comme signalisation en retour de confirmation, l'interruption en temps opportun du signal (RDY) de mise à disposition de réponse, qui est envoyé par l'unité périphérique (PE) après un appel formulé par le dispositif (CHn) de commande de canal, est évaluée avant que la première instruction suivante de transfert (OPCME avec STB = 1) devienne active au niveau de l'unité périphérique (PE), après évaluation du mot d'état (SDB1) transmis de l'appareil.

3. Procédé suivant la revendication 1 ou 2, caractérisé par le fait que l'exécution d'un transfert de données selon le procédé streaming (SMC = 1) s'effectue dans un sens ou dans l'autre, en fonction de l'instruction de transfert (OPCMD) communiquée au dispositif (CHn) de commande de canal et à l'unité périphérique (PE), respectivement lorsqu'un signal de denande (SR ou CHREQ), qui affiche l'état prêt à la réception du côté réception respectif (PE ou CHn), devient actif dans l'une des lignes d'interface, et que le signal de demande est maintenu jusqu'à la fin du transfert déclenché de données ou bien jusqu'à ce qu'une interruption soit imposée.

4. Procédé suivant la revendication 3, caractérisé par le fait que le côté émission (CHn ou PE) indique au côté réception (PE ou CHn) une interruption du transfert de données par suite de l'absence d'émission d'impulsions de validité (STB ou CESTB) pendant un intervalle de temps prédéterminé, tandis qu'une interruption du côté émission respectif (CH ou PE) est indiquée au côté réception respectif (PE ou CH) directement par une interruption transitoire du signal de demande (SR ou CHREQ) qui caractérise l'état prêt à la réception.

5. Procédé suivant l'une des revendications 1 à 4, caractérisé par le fait que toutes les impulsions de validité (STB ou CESTE) arrivant sur le côté réception respectif (PE ou CHn) sont confirmées par des impulsions d'accusé de réception renvoyées au côté émission respectif (CHn ou PE).

6. Procédé suivant la revendication 5, caractérisé par le fait qu'on utilise, comme impulsions de réception, les impulsions de validité (CESTB ou STB) qui sont disponibles respectivement lors de l'émission.

7. Procédé suivant la revendication 5 ou 6, caractérisé par le fait que, sur le côté émission respectif (CHn ou PE), aussi bien les impulsions de validité émises (STB ou CESTB) que les impulsions reçues d'accusé de réception (CESTE ou STB) sont comptées et que les résultats de comptage obtenus sont comparés entre eux à la fin de chaque transfert de données, un traitement d'erreur étant déclenché dans le cas où les résultats de comptage diffèrent.

8. Procédé suivant l'une des revendications 5 à 7, caractérisé par le fait que dans le cas d'une interruption du transfert de données dans le dispositif (CHn) de commande de canal servant de récepteur, par suite du blocage de la mémoire tampon (BUF A/B) prenant en charge les mots de données (DIN) provenant de la mémoire tampon supplémentaire (INBUS), l'émission d'impulsions d'accusé de réception (STB) est interrompue et ces impulsions sont retransmises pendant une interruption d'émission ultérieure par l'unité périphérique (PE), ou au plus tard avant la fin du transfert de données.

9. Procédé suivant l'une des revendications 3 à 8, caractérisé par le fait que dans le cas du dépassement d'un état prédéterminé de remplissage (par exemple ENTEX = 0 ou 2 ou 4) de la mémoire tampon supplémentaire (INBUF) dans le dispositif (CHn) de commande de canal, le transfert des données depuis l'unité périphérique (PE) en direction du dispositif (CHn) de commande de canal est interrompu par le fait que le signal de demande (CHREQ), qui caractérise l'état prêt à la réception du dispositif (CHn) de commande de canal, est débranché de façon transitoire.

10. Procédé suivant la revendication 9, caractérisé par le fait que la capacité de mémoire, accrue au-delà de l'état prédéterminé de remplissage (par exemple ENTEX = 2 ou 4) de la mémoire tampon supplémentaire (INBUF) dans le dispositif (CHn) de commande de canal, est réglée sur le nombre de mots de données (DIN), auquel il faut s'attendre après l'exécution d'une interruption par le dispositif (CHn) de commande de canal.

11. Procédé suivant la revendication 9 ou 10, caractérisé par le fait que l'état de remplissage de commande prédéterminé (par exemple ENTEX = 2) est modifiable.

12. Procédé suivant l'une des revendications 3 à 11 caractérisé par le fait que l'arrêt du transfert des données par l'un des deux côtés (CHn ou PE) est communiquée à l'autre côté respectif (PE ou CHn) par les signaux d'interface (TERM ou END), qui indiquent habituellement la fin de la transmission et sont retransmis pendant la phase finale du transfert des données, que dans le cas d'un arrêt du transfert des données déclenché par le côté émission respectif (CHn ou PE), le signal de demande (SR ou CHREQ), qui caractérise l'état prêt à la réception, est interrompu à titre d'accusé de réception pour l'identification de fin sur le côté réception (PE ou CHn) après l'émission des impulsions restantes d'accusé de réception (CESTB ou STB) et est retransmis ensuite pendant la phase terminale du transfert des données et que dans le cas d'un marquage de fin exécuté par le côté réception respectif (PE ou CHn), l'émission continue des données est arrêtée sur le côté émission (CHn ou PE), tandis que sur le côté réception (PE ou CHn), les conditions définitives pour le déclenchement de la phase terminale sont crées, tout en respectant des durées mimimales $(T_A, T_B)$ prédéterminées, uniquement après l'émission de la dernière impulsion d'accusé de réception (CESTB ou STB).

13. Procédé suivant la revendication 12, selon lequel le déclenchement de la phase terminale d'un transfert de données est réalisé par l'unité périphérique (PE) avec une nouvelle délivrance du signal de demande (SC) caractérisant l'état prêt à la réception, caractérisé par le fait que, dans le cas d'un arrêt du transfert de données déclenché par l'unité périphérique (PE) utilisée en tant que récepteur, la durée minimale (T) pour le déclenchement de la phase terminale est fixée aussi bien à partir du début du marquage de fin (END) qu'à partir de la fin de la dernière impulsion respectivement émise d'accusé de réception (CESTB), tandis que dans le cas d'un arrêt du transfert de données par le dispositif (CHn) de commande de canal fonctionnant en tant que récepteur, la durée minimale $(T_B)$ est fixée à partir du début du marquage de fin (END) par l'unité périphérique (PE) et la délivrance du signal de demande (SR) ne s'effectue que lorsque, après l'écoulement de cette durée minimale $T_B$), il se produit l'interruption du signal de demande (CHREQ), qui caractérise l'état prêt à la réception du dispositif (CHn) de commande de canal et qui, en dépit du marquage de fin (TERM) déjà exécuté, reste appliqué jusqu'à l'émission de la dernière impulsion d'accusé de réception (STB).

14. Dispositif pour la mise en oeuvre du procédé suivant l'une des revendications 1 à 13, caractérisé par
- une seconde mémoire tampon (INBUF) comportant un registre d'entrée (INPREG) situé du côté du canal en plus de la mémoire tampon (BUF A/B) existante et du registre de réception (DINR) branché en amont de cette mémoire et qui sert à recevoir des données (DIN) arrivant par l'intermédiaire du canal et qui est situé dans le dispositif (CHn) de commande de canal, le registre d'entrée (INPREG), la mémoire tampon supplémentaire (INBUF) et le registre de réception (DINR) constituant un circuit série pour les données (DIN) arrivant par l'intermédiaire du canal.

- un commutateur de sélection (MUX-DIN) branché en amont du registre de réception (DINR) et qui, en fonction de la présence ou de l'absence du signal de type de fonctionnement pour le procédé streaming (SMC), relie l'entrée du registre de réception (DINR) au choix à la sortie de la mémoire tampon supplémentaire (INBUF) ou directement aux lignes (DIN) du canal.

- des dispositifs servant à émettre ou à évaluer un signal d'interface (SMC) indiquant un transfert de données selon le procédé streaming, et d'un signal d'interface (CESTB) indiquant la validité des données (DIN) émises par l'unité périphérique (PE),

- des dispositifs (DVP-ST) servant à évaluer l'instant d'interruption du signal d'état prêt à la réponse (RDY) de l'unité périphérique (PE) commandée par l'intermédiaire du canal, en vue de déterminer la possibilité d'exécution du transfert de données selon le procédé streaming,

- un dispositif étendu de commande d'exécution (TK-ST) situé à l'intérieur du dispositif (CHn) de commande de canal et servant à exécuter le transfert des données sur le côté du canal, en fonction de l'opération d'entrée/ sortie devant être respectivement exécutée, et qui peut être commuté, lors de l'exécution du transfert de données selon le procédé streaming, sur une séquence de travail correspondante pour la commande automatique de l'échange d'informations de données de commande, par l'intermédiaire du canal, pendant l'exécution d'un transfert de données, et

- des dispositifs (CESTBPH0, CESTBPH1, U4, ENTRYVAL, GS8; U6, U5) servant à dériver les impulsions de commande (STBFWE, CLEN, CLDINR, CLEX) pour la retransmission, exécutée par échelons, des données (DIN) arrivant par l'intermédiaire du canal, en direction de la mémoire tampon (BUF A/B) du dispositif (CHn) de commande des canaux, en fonction des impulsions de validité (CESTB) accompagnant les données (DIN).

15. Dispositif suivant la revendication 14, caractérisé par des dispositifs (U8, U9, GS11, GS10, GS12, CHREQ) servant à produire et à évaluer un signal d'interface (CHREQ), qui caractérise l'état prêt à la réception du dispositif (CHn) de commande de canal pour la réception des données, dans le dispositif de commande d'exécution (TK-ST).

16. Dispositif suivant la revendication 15, caractérisé par des dispositifs (ENTEX) servant à contrôler l'état de remplissage de la mémoire tampon supplémentaire (INBUF) et qui sont accouplés au dispositif de commande d'exécution (TK-ST) en vue d'influencer la production du signal d'état prêt à la réception (CHREQ) du dispositif (CHn) de commande des canaux ainsi que de la séquence d'exécution pour la commande de l'échange de données ou d'informations.

17. Dispositif suivant l'une des revendications 14 à 16, caractérisé par le fait que le dispositif de commande d'exécution (TK-ST) comporte un compteur (SECT) opérant de façon cyclique avec une longueur de cycle variable, et deux circuits de commande (GS2, SEQRUN et GS5, STRUN), qui dépendent l'un de l'autre et dont l'un (GS5-STREN) peut être placé à l'état actif lors de l'exécution du transfert de données selon le procédé streaming (SMC = 1) et dont l'autre (GS2-SEQRUN) peut être placé à l'état actif lors de l'exécution du transfert de données conformément aux autres procédés de transmission possibles, que les sorties du compteur (SECT) sont reliées à une partie des entrées d'adresses d'une mémoire (PROM) de telle sorte que, sur la base des contenus des sections de la mémoire commandées successivement, des signaux de sortie sont délivrés pour la dérivation des signaux de commande et des signaux d'interface, qui doivent être produits pendant un cycle de comptage, et qu'une partie des signaux de sortie du compteur de poids supérieur peuvent être commutés, pour l'exécution d'un transfert de données selon le procédé streaming, sur un potentiel fixe (par exemple "1") de sorte que par suite du décalage des adresses, qui y est lié, un autre groupe de sections présentes dans la mémoire de commande (PROM) peut être commandé.

18. Dispositif suivant les revendications 16 et 17. caractérisé par le fait que le circuit de commande (GS5, STRUN) servant à commander la séquence d'exécution lors du procédé streaming (SMC = 1) contrôle les signaux de commande des dispositifs (ENTEX) de contrôle de l'état de remplissage pour la mémoire tampon supplémentaire (INBUF) et laisse le compteur (SECT) branché en aval exécuter son comptage de cycle en cycle jusqu'à ce que, indépendamment des conditions finales présentes (par exemple BC = 0) pour le transfert des données, tous les mots de données (DIN) mémorisés temporairement dans la mémoire tampon supplémentaire (INBUF), soient retransmis à la mémoire tampon (BUF A/B) du dispositif (CHn) de commande de canal, auquel cas une impulsion de validité (STB) est envoyée en tant qu'impulsion d'accusé de réception, lors de chaque cycle, à l'unité périphérique (PE) raccordée.

# FIG 1

FIG 2

0 111 123

FIG 3

FIG 4

FIG 5

# FIG 6

FIG 7A          FIG 7B

FIG 7C

FIG 8A

FIG 9A

FIG 8B

FIG 8C

FIG 9B

FIG 9C